(19) Europäisches Patentamt / European Patent Office / Office européen des brevets

(11) **EP 4 704 396 A1**

(12) **EUROPEAN PATENT APPLICATION**
published in accordance with Art. 153(4) EPC

(43) Date of publication:
04.03.2026   Bulletin 2026/10

(21) Application number: 23958597.9

(22) Date of filing: 16.11.2023

(51) International Patent Classification (IPC):
*H04L 45/121* (2022.01)

(52) Cooperative Patent Classification (CPC):
H04L 45/121

(86) International application number:
PCT/CN2023/132127

(87) International publication number:
WO 2025/102320 (22.05.2025 Gazette 2025/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: New H3C Technologies Co., Ltd.
Hangzhou, Zhejiang 310052 (CN)

(72) Inventors:
• GUO, Daorong
  Beijing 100102 (CN)
• YOU, Xuejun
  Beijing 100102 (CN)

(74) Representative: Zimmermann & Partner
Patentanwälte mbB
P.O. Box 330 920
80069 München (DE)

(54) **METHOD AND APPARATUS FOR ACQUIRING UPPER LIMIT OF DELAY COMPENSATION, AND FORWARDING NODE**

(57)   A method and apparatus for acquiring an upper limit of delay compensation, and a forwarding node. The method comprises: a first node sendine a reouest nacket to a second node by means of a first path in a target path group, and acquiring a first time point at which the first node sends the request packet; by means of cach path in the target path group, respectively receiving response packets sent by the second node, and constructing metadata corresponding to cach response packet, wherein the metadata comprises a second time point of receiving the response packet, a request delay and a response delay; on the basis of the first time point, the request delays, the second time point corresponding to each path, and the response delay corresponding to each path, determining a line delay corresponding to each path; and calculating a difference between a reference delay corresponding to the target path group and the line delay corresponding to each path, so as to obtain an upper limit of delay compensation corresponding to each path. The technical solution provided in embodiments of the present application can reduce the jitter of end-to-end services, ensuring the deterministic transmission of the end-to-end services.

sending a request packet to a second node through a first path in a target path group, and obtaining a first time point when the first node sends the request packet — S21

receiving a reply packet sent by the second node through each path in the target path group, and constructing the metadata corresponding to each reply packet; the metadata corresponding to each reply packet includes a second time point when the first node receives the reply packet, a request delay and a reply delay carried in the reply packet; the request delay is the residency delay of all network domains that the request packet passes through on the first path, and the reply delay corresponding to each path includes the residency delay of all network domains that the reply packet passes through on the path — S22

determining the link delay corresponding to each path according to the first time point, the request delay, the second time point corresponding to each path, and the reply delay corresponding to each path — S23

calculating the difference between the reference delay corresponding to the target path group and the line delay corresponding to each path to obtain the compensation delay upper limit corresponding to each path — S24

Figure 2

## Description

### Technical Field

This disclosure relates to the technical field of communications, and in particular to a method, a device, and a forwarding node for obtaining a compensation delay upper limit.

### Background

In deterministic networks, end-to-end services may span multiple network domains and different queuing mechanisms are used in different domains. Due to scheduling and traffic admission control at network domain boundaries, as well as different queuing and forwarding mechanisms within deterministic network domains, the jitter of end-to-end services spanning multiple network domains cannot meet the requirements of high deterministic transmission. To meet the requirements of high deterministic transmission, it is necessary to obtain the compensation delay upper limit for the path, and to perform delay compensation on data packets based on the compensation delay upper limit.

At present, the premise of obtaining the compensation delay upper limit is that the link delay does not change. However, in practical applications, the length of the link will change due to environmental changes, path changes and other factors, which will lead to the change of the link delay. When the link delay changes, if the compensation delay upper limit is still obtained on the premise that the link delay does not change, the end-to-end transmission delay and jitter will be unbounded, and the requirements of high deterministic transmission cannot be guaranteed.

### Summary

The purpose of the example of the disclosure is to provide a method, a device and a forwarding node for obtaining a compensation delay upper limit, so as to reduce the jitter of end-to-end services and ensure the deterministic transmission of end-to-end services. The specific technical solution is as follows.

In the first aspect, the example of the disclosure provides a method for obtaining a compensation delay upper limit, wherein the method is applied to a first node connected to a second node through a target path group including multiple paths, and the method comprises:

sending a request packet to the second node through a first path in the target path group, and obtaining a first time point when the first node sends the request packet;

receiving a reply packet sent by the second node through each path in the target path group, and constructing metadata corresponding to each reply packet; wherein the metadata corresponding to each reply packet includes a second time point when the first node receives the reply packet, a request delay and a reply delay carried in the reply packet; the request delay is a residency delay of all network domains that the request packet passes through on the first path, and the reply delay corresponding to each path includes a residency delay of all network domains that the reply packet passes through on the path;

determining a link delay corresponding to each path according to the first time point, the request delay, the second time point corresponding to each path, and the reply delay corresponding to each path;

calculating a difference between a reference delay corresponding to the target path group and the link delay corresponding to each path to obtain the compensation delay upper limit corresponding to each path.

In the second aspect, the example of the disclosure provides for obtaining a compensation delay upper limit, wherein the method is applied to a second node connected to a first node through a target path group including multiple paths, and the method comprises:

receiving a request packet sent by the first node through a first path in the target path group, and constructing metadata corresponding to the request packet; wherein the metadata includes a request delay carried in the request packet; the request delay is a residency delay of all network domains that the request packet passes through on the first path;

encapsulating the request delay in a reply packet;

sending the reply packet to the first node through each path in the target path group.

In the third aspect, the example of the disclosure provides a device for obtaining a compensation delay upper limit, wherein the device is applied to a first node connected to a second node through a target path group including multiple paths, and the device comprises a scheduling module, an analysis module and an active detection module;

the scheduling module is to send a request packet to the second node through a first path in the target path group, and obtain a first time point when the first node sends the request packet; and submit the first time point to the active detection module;

the analysis module is to receive a reply packet sent by the second node through each path in the target path group; each reply packet includes a request delay and a reply delay; the request delay is a residency delay of all network domains that the request packet passes through on the first path, and the reply delay corresponding to each path includes a residency delay of all network domains that the reply packet passes through on the path; construct metadata corresponding to each reply packet, and submit the metadata corresponding to each reply packet to the active detection module; the metadata corresponding to each reply packet includes a second time point when the first node receives the reply packet, the request delay and the reply delay carried in the reply packet;

the active detection module is to determine a link delay corresponding to each path according to the first time point, the request delay, the second time point corresponding to each path, and the reply delay corresponding to each path; calculate a difference between a reference delay corresponding to the target path group and the link delay corresponding to each path to obtain the compensation delay upper limit corresponding to each path.

In the fourth aspect, the example of the disclosure provides a device for obtaining a compensation delay upper limit, wherein the device is applied to a second node connected to a first node through a target path group including multiple paths, and the device comprises a scheduling module, an analysis module and a passive response module;

the analysis module is to receive a request packet sent by the first node through a first path in the target path group, and obtain metadata of the request packet; wherein the metadata includes a request delay carried in the request packet; the request delay is a residency delay of all network domains that the request packet passes through on the first path; and submit the metadata to the passive response module;

the passive response module is to encapsulate the request delay in a reply packet; and send the reply packet to the scheduling module;

the scheduling module is to send the reply packet to the first node through each path in the target path group.

In the fifth aspect, the example of the disclosure provides a forwarding node for executing any method provided in the first aspect or any method provided in the second aspect.

In the technical solution provided by the example of the disclosure, the first node sends a request packet to the second node through a path in the target path group; the second node sends a reply packet to the first node through each path in the target path group. The request packet and reply packet are transmitted along the path in the target path group, pass through all network domains on the path, and then the request packet and reply packet can be filled with the residency delay of all network domains on the path. Based on this, based on the request packet and reply packet, the first node can obtain the first time point when the first node sends the request packet, the second time point when the first node receives the reply packet, the request delay, and the reply delay corresponding to each path, and then accurately determine the link delay corresponding to each path based on the obtained information, and accurately determine the compensation delay upper limit corresponding to each path based on the accurate link delay. This enables the change of link delay to be reflected in the compensation delay. Based on the change of link delay, the compensation delay can be adjusted adaptively. That is, based on the accurate compensation delay upper limit, the delay compensation on data packets can effectively eliminate jitter, make the service not aware of the delay change caused by environment and other factors, and reduce the jitter of end-to-end services, for example, it reduces the jitter between the first node and the second node of the target path group, ensures the deterministic transmission of end-to-end services, and improves the reliability of service transmission.

## Brief Description of the Drawings

The drawings described here are intended to provide a further understanding of the present disclosure and form a part of it. The illustrative examples and their explanations of the present disclosure are to explain the present disclosure and do not constitute an improper limitation on the present disclosure.

Figure 1 is a first schematic diagram of end-to-end service networking provided in an example of the present disclosure.

Figure 2 is a first schematic flowchart of a method for obtaining a compensation delay upper limit provided in the example of the present disclosure;

Figure 3 is a schematic diagram of packet transmission between nodes provided in the example of the present disclosure.

Figure 4 is a schematic decomposition diagram of the delay corresponding to a path group shown in Figure 3;

Figure 5 is a schematic flowchart of generating a request packet provided in the example of the present disclosure;

Figure 6 is a second schematic flowchart of a method for obtaining a compensation delay upper limit provided in the example of the present disclosure;

Figure 7 is a schematic structural diagram of a first table and a second table provided in the example of the present disclosure;

Figure 8 is a schematic structural diagram of a third table and a fourth table provided in the example of the present disclosure;

Figure 9 is a third schematic flowchart of a method for obtaining a compensation delay upper limit provided in the example of the present disclosure;

Figure 10 is a first schematic structural diagram of a device for obtaining a compensation delay upper limit provided in the example of the present disclosure;

Figure 11 is a second schematic structural diagram of a device for obtaining a compensation delay upper limit provided in the example of the present disclosure;

Figure 12 is a schematic structural diagram of an active detection module provided in the example of the present disclosure;

Figure 13 is a second schematic diagram of end-to-end service networking provided in the example of the present disclosure.

Figure 14 is a third schematic structural diagram of a device for obtaining a compensation delay upper limit provided in the example of the present disclosure;

Figure 15 is a fourth schematic structural diagram of a device for obtaining a compensation delay upper limit provided in the example of the present disclosure;

Figure 16 is a schematic structural diagram of a passive response module provided in the example of the present disclosure;

Figure 17 is a schematic diagram of the process A of the active detection module learning the compensation delay upper limit provided in the example of the present disclosure;

Figure 18 is a schematic diagram of the process B of the active detection module learning the compensation delay upper limit provided in the example of the present disclosure;

Figure 19 is a schematic diagram of the process C of the active detection module learning the compensation delay upper limit provided in the example of the present disclosure;

Figure 20 is a schematic diagram of the process D of the active detection module learning the compensation delay upper limit provided in the example of the present disclosure.

**Detailed Description**

In order to make the purpose, technical solution, and advantages of the present disclosure clearer, the present disclosure will be further described in detail below with reference to the attached drawings and examples. Obviously, the described examples are only a portion of the examples of the present disclosure, not all of them. All other examples acquired by those of ordinary skill in the art based on the examples in the present disclosure belong to the protection scope of the present disclosure.

At present, the number of global machine communication connections is growing rapidly year by year, approaching 30 billion, and it is expected to reach 1 trillion connections by 2035. The whole industry Internet, which mainly connects intelligent machines, will become an important development direction of the future network. The communication mode and flow model of intelligent machines will undergo fundamental changes, wherein, data communication scenarios such as remote control, intelligent manufacturing, land, sea and air integration put forward high deterministic transmission requirements for the network with ultra-low delay and ultra-low jitter.

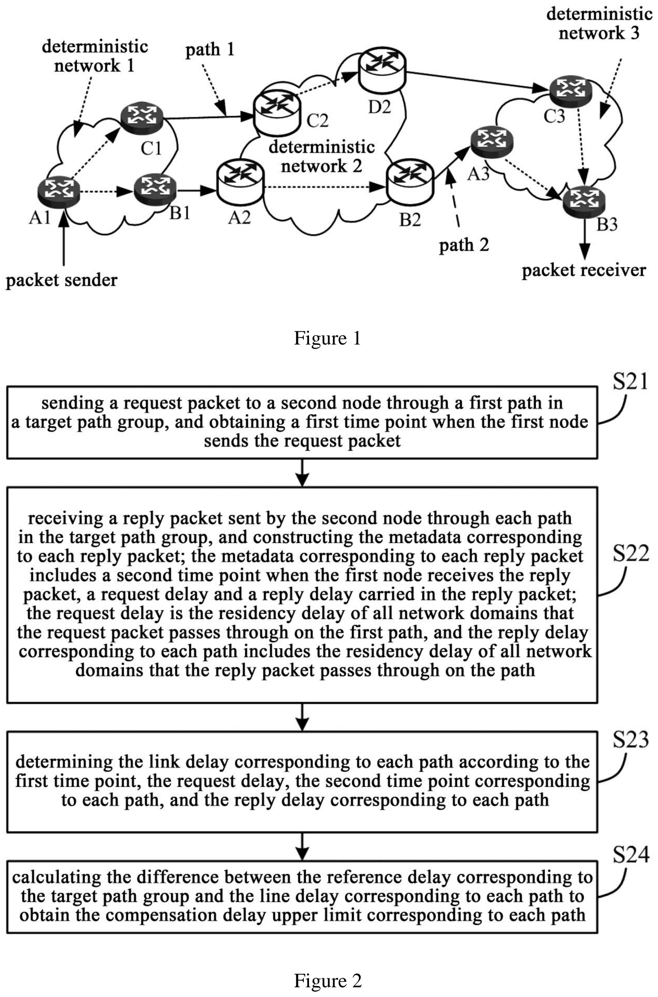

In a deterministic network, end-to-end services may span multiple network domains, as shown in Figure 1. The network consists of three network domains, such as deterministic network 1 to deterministic network 3. The deterministic network 1 includes three forwarding nodes, such as A1, B1 and C1; deterministic network 2 includes four forwarding nodes, such as A2, B2, C2 and D2; deterministic network 3 includes three forwarding nodes, such as A3, B3 and C3. The communication between the packet sender (Talker) and the packet receiver (Listener) spans the three network domains of deterministic network 1 to deterministic network 3. The forwarding node can be a router, a switch, a gateway and other network device. Deterministic network 1 to deterministic network 3 use different queuing mechanisms. Due to scheduling and traffic admission control at network domain boundaries, as well as different queuing and forwarding mechanisms within deterministic network domains, the jitter of end-to-end services spanning multiple network domains cannot meet the requirements of high deterministic transmission.

To meet the requirements of high deterministic transmission, it is necessary to obtain the compensation delay upper limit of the path, and to perform delay compensation on data packets based on the compensation delay upper limit. Figure 1 is still taken as an example. There are two paths between forwarding node A1 and forwarding node B3, namely, path 1 and path 2. Path 1 and path 2 form a path group 1. Path group 1 provides protection services for data transmission between forwarding node A1 and forwarding node B3, that is, even if one path in path group 1 fails, the other path can also be used for data transmission. Therefore, path group 1 can also be called a protection service group. The compensation delay of Path 1 and Path 2 is shown in Formula (1) - Formula (3) below.

$$CompD\_i = Cap\_i - ActD\_i \qquad\qquad (1)$$

$$Cap\_i = PthRefD - FixD\_i \qquad\qquad (2)$$

$$ActD\_i = T'1\_i + T'2\_i + T'3\_i \qquad\qquad (3)$$

Wherein, CompD_i represents the compensation delay of path i, Cap_i represents the compensation delay upper limit of path i, ActD_i represents the sum value of residency delay of deterministic network 1 to deterministic network 3 passed through on path i; PthRefD represents the reference delay of path group 1, FixD_i represents the link delay between domains on path i, T'1_i represents the residency delay of deterministic network 1 through which a packet passes on path i, T'2_i represents the residency delay of deterministic network 2 through which the packet passes on path i, T'3_i represents the residency delay of deterministic network 3 through which the packet passes on path i, i=1 or 2.

For end-to-end services that span multiple network domains, each path spans multiple network domains. When a packet is transmitted along a path, it will pass through each network domain that the path spans. The above residency delay of a packet in each network domain is the transmission delay of the packet in each network domain. When different packets pass through the same network domain on the same path, the residency delay in the network domain may be the same or different. The above link delay between domains is the transmission delay of the packet between two adjacent network domains.

The premise of the method for obtaining a compensation delay upper limit above-mentioned is that the link delay does not change. However, in practical applications, the length of the link will change due to environmental changes, path changes and other factors. For example, the length of the link will change due to the change of ambient temperature, the length of the link will increase due to the suspension of coaxial cable network cable, and the length of the link will change due to the recovery after path failure. In some cases, the length of the link can vary up to 20%. The change of link length will inevitably lead to the change of link delay. When the link delay changes, if the compensation delay upper limit is obtained still on the premise that the link delay does not change, the end-to-end transmission delay and jitter will be unbounded, and the requirements of high deterministic transmission cannot be guaranteed.

In order to reduce the jitter of end-to-end services and ensure the deterministic transmission of end-to-end services, based on multi-path planning, an example of the disclosure provides a method for obtaining a compensation delay upper limit, as shown in Figure 2. The method for obtaining a compensation delay upper limit is applied to a first node connected to a second node through a target path group including multiple paths. The first node is a forwarding node that performs delay compensation, referred to as a delay compensation node (COMPENSATION NODE, CN) for short. The delay compensation node is the tail node of the path, such as the forwarding node B3 in Figure 1. The second node is the head node (HEAD NODE, HN) of the path, such as the forwarding node A1 in Figure 1. In the process of obtaining the compensation delay upper limit, the first node CN is an active detection node, and the second node HN is a passive response node. The target path group is any path group that provides protection services for the communications between the first node and the second node. The method for obtaining a compensation delay upper limit includes the following blocks.

Block S21, sending a request packet to the second node through a first path in the target path group, and obtaining a first time point when the first node sends the request packet;

Block S22, receiving a reply packet sent by the second node through each path in the target path group, and constructing the metadata corresponding to each reply packet; wherein the metadata corresponding to each reply packet includes a second time point when the first node receives the reply packet, a request delay and a reply delay carried in the reply packet; the request delay is a residency delay of all network domains that the request packet passes through on the first path, and the reply delay corresponding to each path includes a residency delay of all network domains that the reply packet passes through on the path;

Block S23, determining the link delay corresponding to each path according to the first time point, the request delay, the second time point corresponding to each path, and the reply delay corresponding to each path;

Block S24, calculating the difference between the reference delay corresponding to the target path group and the link delay corresponding to each path to obtain the compensation delay upper limit corresponding to each path.

In the technical solution provided by the example of the disclosure, the first node sends a request packet to the second node through a path in a target path group; the second node sends a reply packet to the first node through each path in the target path group. The request packet and reply packet are transmitted along the path in the target path group, pass through all network domains on the path, and then the request packet and reply packet can be filled with the residency delay of all network domains passed through on the path. Based on this, based on the request packet and reply packet, the first node can obtain the first time point when the first node sends the request packet, the second time point when the first node receives the reply packet, the request delay, and the reply delay corresponding to each path, and then accurately determine the link delay corresponding to each path based on the obtained information, and accurately determine the compensation delay upper limit corresponding to each path based on the accurate link delay. This enables the change of link delay to be reflected in the compensation delay. Based on the change of link delay, the compensation delay can be adjusted adaptively. That is, the delay compensation on data packets is performed based on the accurate compensation delay upper limit, which can effectively eliminate jitter, make the service not aware of the delay change caused by environment and other factors, and reduce the jitter of end-to-end services, for example, it reduces the jitter between the first node and the second node of the target path group, ensures the deterministic transmission of end-to-end services, and improves the reliability of service transmission.

In addition, in the technical solution provided by the example of the present disclosure, only time synchronization in the network domain is required to accurately obtain the residency delay in each network domain, and then to accurately obtain the compensation delay upper limit, without the need of time synchronization between domains, which reduces the difficulty of solution implementation, facilitates wide application, and improves the accuracy of delay compensation.

In block S21 above, the first path can be any path in the target path group, or it can be a path in a pre-specified target path group, such as the path with low failure probability or the shortest path length. The request packet is an OAM (Operation Administration Maintenance) packet constructed by the first node to obtain the compensation delay upper limit. In order to facilitate the subsequent acquisition of the request delay, that is, the residency delay of all network domains that the request packet passes through on the first path, a field can be added in the request packet, such as the first field, which is to carry the request delay.

When obtaining the compensation delay upper limit, the first node constructs the request packet and sends the request packet to the second node through the first path. When sending the request packet, the first node can obtain the time point of sending the request packet, that is, the first time point. When the request packet is transmitted along the first path, the forwarding node on the first path can statistically obtain the residency delay of each network domain that the request packet passes through on the first path, and adds the statistically obtained residency delay into the request packet, for example, into the first field above.

In the example of the disclosure, in order to reduce the computing resources of the forwarding node on the path, the residency delay of each network domain can be added into the request packet in an independent form. For example, in Figure 1, forwarding node B3 sends request packet 1 to forwarding node A1 through path 1. Request packet 1 passes through deterministic network 1 to deterministic network 3 on path 1. On path 1, the exit edge forwarding node C3 of deterministic network 3 statistically obtains the residency delay of request packet 1 in deterministic network 3 as ActD_Req_3, and adds ActD_Req_3 into request packet 1. On path 1, the exit edge forwarding node C2 of deterministic network 2 statistically obtains the residency delay of request packet 1 in deterministic network 2 as ActD_Req_2, and adds ActD_Req_2 into request packet 1. On path 1, the exit edge forwarding node A1 of deterministic network 1 statistically obtains the residency delay of request packet 1 in deterministic network 1 as ActD_Req_1, and adds ActD_Req_1 into request packet 1. In this case, request packet 1 carries ActD_Req_1, ActD_Req_2 and ActD_Req_3. The sum value of ActD_Req_1. ActD_Req_2 and ActD_Req_3 is the request delay.

In the example of the disclosure, in order to reduce the computing resources of the first node, the residency delay of each network domain can be added into the request packet in the form of accumulation. For example, in Figure 1, forwarding node B3 sends request packet 2 to forwarding node A1 through path 1. Request packet 2 passes through deterministic network 1 to deterministic network 3 on path 1. On path 1, the exit edge forwarding node C3 of deterministic network 3 statistically obtains the residency delay of request packet 1 in deterministic network 3 as ActD_Req_3, and adds ActD_Req_3 into request packet 1. On path 1, the exit edge forwarding node C2 of deterministic network 2 statistically obtains the residency delay of request packet 1 in deterministic network 2 as ActD_Req_2, and calculates the sum value of the ActD_Req_3 and ActD_Req_2 to obtain ActD_Req_2', and updates ActD_Req_3 in request packet 1 with ActD_Req_2'. On path 1, the exit edge forwarding node A1 of deterministic network 1 statistically obtains the residency delay of request packet 1 in deterministic network 1 as the sum value of ActD_Req_1 and ActD_Req_2', to obtain ActD_Req_1', and updates the ActD_Req_2' in request packet 1 with ActD_Req_1'. In this case, request packet 1 carries ActD_Req_1'. ActD_Req_1' is the request delay.

In the above examples, the example of adding residency delay into the request packet by the exit edge forwarding node is taken as an illustration. In the example of the disclosure, it is also possible to add residency delay into the request packet by any forwarding node in the network domain, because the transmission in the network domain is deterministic, and in the case that the path is determined, any forwarding node can determine the corresponding residency delay.

After the first node sends the request packet through the first path in the target path group, the second node receives the request packet sent by the first node through the first path in the target path group. After receiving the request packet sent by the first node, the second node can construct the metadata corresponding to the request packet, such as a receiving interface identifier, the time point when the second node receives the request packet (such as a third time point), the identifier of the target path group, the source IP (Internet Protocol) address of the request packet, the request delay, and other data information describing the request packet. Based on the metadata corresponding to the request packet, the second node constructs n OAM packets, that is, reply packets, wherein n is the number of paths in the target path group. In order to facilitate the subsequent acquisition of the request delay and the reply delay, and facilitate the first node to calculate the compensation delay upper limit, two fields can be added in the reply packet, such as a second field and a third field. The second field is to carry the request delay, and the third field is to carry the reply delay. The reply delay is the residency delay of all network domains that the reply packet passes through on each path.

The second node extracts the request delay from the received request packet and adds the request delay into the reply packet, such as into the second field above. The second node sends a reply packet to the first node through each path in the target path group. When sending a reply packet through each path in the target path group, the second node can obtain the time point when the second node sends the reply packet through this path, that is, a fourth time point. When the reply packet is transmitted along each path, the forwarding node on this path can statistically obtain the residency delay of each network domain that the reply packet passes through on this path, and adds the statistically obtained residency delay into the reply packet, for example, into the third field above.

In the example of the disclosure, in order to reduce the computing resources of the forwarding node on the path, the residency delay of each network domain can be added into the reply packet in an independent form. For example, in Figure 1, forwarding node A1 sends reply packet 1 to forwarding node B3 respectively through path 1 and path 2. Take Path 1 as an example, request packet 1 passes through deterministic network 1 to deterministic network 3 on path 1. On path 1, the exit edge forwarding node C1 of deterministic network 1 statistically obtains the residency delay of reply packet 1 in deterministic network 1 as ActD_Ack_1, and adds ActD_Ack_1 into reply packet 1. On path 1, the exit edge forwarding node D2 of deterministic network 2 statistically obtains the residency delay of reply packet 1 in deterministic network 2 as ActD_Ack_2, and adds ActD_Ack_2 into reply packet 1. On path 1, the exit edge forwarding node B3 of deterministic network 3 statistically obtains the residency delay of reply packet 1 in deterministic network 3 as ActD_Ack_3, and adds ActD_Ack_3 into reply packet 1. In this case, reply packet 1 carries ActD_Ack_1, ActD_Ack_2 and ActD_Ackq_3. The sum value of ActD_Ack_1, ActD_Ack_2 and ActD_Ackq_3 is the reply delay.

In the example of the disclosure, in order to reduce the computing resources of the first node, the residency delay of each network domain can be added into the reply packet in the form of accumulation. For example, in Figure 1, forwarding node A1 sends reply packet 2 to forwarding node B3 respectively through path 2 and path 2. Take Path 1 as an example, request packet 2 passes through deterministic network 1 to deterministic network 3 on path 1. On path 1, the exit edge forwarding node C1 of deterministic network 1 statistically obtains the residency delay of reply packet 2 in deterministic network 1 as ActD_Ack_1, and adds ActD_Ack_1 into reply packet 2. On path 1, the exit edge forwarding node D2 of deterministic network 2 statistically obtains the residency delay of reply packet 1 in deterministic network 2 as ActD_Ack_2, calculates the sum value of ActD_Ack_2 and ActD_Ack_1 to obtain ActD_Ack_2', and updates the ActD_Ack_1 in reply packet 2 with ActD_Ack_2'. On path 1, the exit edge forwarding node B3 of deterministic network 3 statistically obtains the residency delay of reply packet 2 in deterministic network 3 as ActD_Ack_3, calculates the sum value of ActD_Ack_3 and ActD_Ack_2' to obtain ActD_Ack_3', and updates the ActD_Ack_2' in reply packet 2 with ActD_Ack_3'. In this case, reply packet 2 carries ActD_Ackq_3'. ActD_Ackq_3' is the reply delay.

In the above examples, the example of adding the residency delay into the reply packet by the exit edge forwarding node is taken as an illustration. In the example of the disclosure, it is also possible to add the residency delay into the reply packet by any forwarding node in the network domain, because the transmission in the network domain is deterministic, and in the case that the path is determined, any forwarding node can determine the corresponding residency delay.

In the example of the disclosure, the forms of the request delay and the reply delay carried in the reply packet can be the same. For example, the request delay and the reply delay carried in the reply packet are in the form of accumulation. The forms of the request delay and the reply delay carried in the reply packet can also be different. For example, the request delay carried in the reply packet is in the form of accumulation, while the reply delay carried in the reply packet is in an independent form.

In some examples, the reply delay may include the delay for the second node to process the request packet, that is, a processing delay. For example, the second node obtains the third time point of receiving the request packet, and obtains the time point of sending the reply delay through a path (such as the fourth time point), calculates the difference between the third time point and the fourth time point, to obtain the delay from the third time point to the fourth time point, that is, the processing delay. The second node can add the processing delay into the corresponding reply delay for the path. In this way, the reply delay finally obtained by the first node is the sum value of the two parts, that is, the sum value of the processing delay and the residency delay of all network domains that the reply packet passes through on the path.

In block S22 above, the first node receives the reply packet sent by the second node through each path in the target path group. If the target path group includes n paths, the first node can receive n reply packets when the n paths are normal. If different paths are used to transmit the same reply packet, the reply delay for transmitting the reply packet can be the same or different. The reply delay obtained by transmitting the reply packet in one path is the reply delay corresponding to the path.

For each received reply packet, after receiving the reply packet sent by the first node, the first node can construct the metadata corresponding to the reply packet, such as a receiving interface identifier, the time point when the first node receives the reply packet (such as the second time point), the identifier of the target path group, the source IP address of the reply packet, the reply delay, and other data information describing the reply packet. When the first node receives n reply packets, it can construct n pieces of metadata.

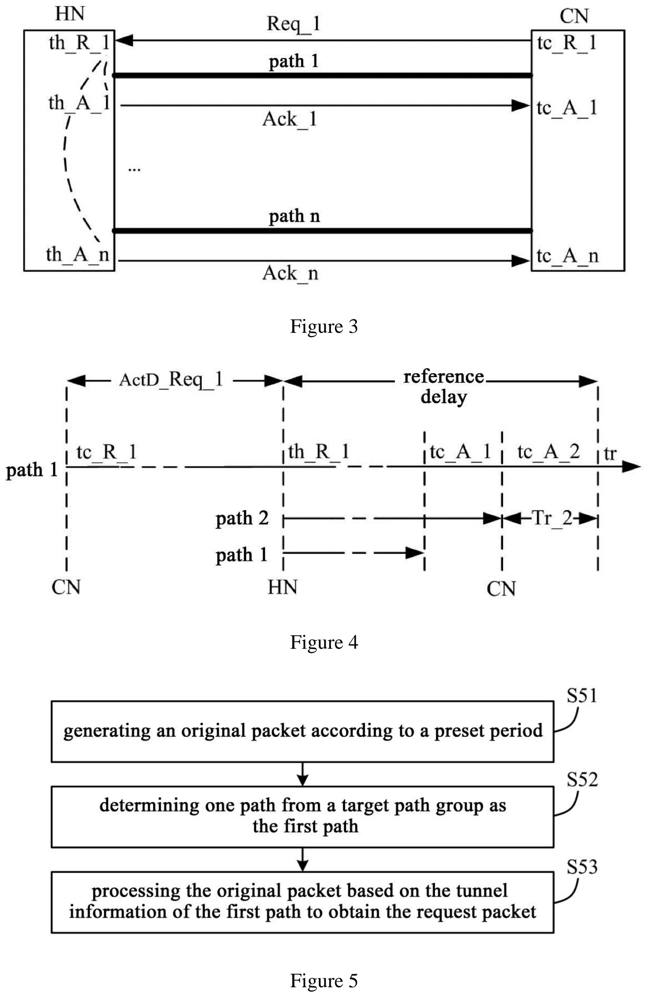

For example, in the packet transmission diagram shown in Figure 3, the thick line between the first node CN and the second node HN represents the path. There is a path group composed of n paths between the first node CN and the second node HN, such as path 1 to path n. The first node CN selects a path from the n paths, such as path 1, and sends a request packet Req_1 to the second node HN through path 1. The time point of sending Req_1 as tc_R_1. The second node receives the request packet Req_1 through path 1 at the time point th_R_1. The second node HN constructs a reply packet and obtains n copies of reply packet Ack_1 to Ack_n. Ack_i is sent to the first node CN through path i at time point th_A_i (i=1,..., n). The first node CN receives Ack_i at tc_A_i. The reply delay carried in Ack_i is the reply delay corresponding to path i.

In the above block S23, the first node determines the link delay corresponding to each path in the target path group based on the first time point of sending the request packet, the second time point of receiving the reply packet, the request delay, the reply delay and other metadata, and then executes block S24. For each path in the target path group, the difference between the reference delay corresponding to the target path group and the link delay corresponding to the path is calculated, to obtain the compensation delay upper limit corresponding to the path. Wherein, the reference delay is the duration between the time point when the second node sends the packet and the time point when the first node receives the packet along the path included in the target path group.

In the example of the disclosure, after the first node obtains the compensation delay upper limit corresponding to each path, it can send the obtained compensation delay upper limit corresponding to each path to the second node. In this way, when the second node subsequently sends a data packet to the first node through a path in the target path group, the data packet can carry the corresponding compensation delay upper limit corresponding to this path. The first node can quickly obtain the compensation delay upper limit from the received data packet, and perform delay compensation on the data packet, which improves the efficiency of delay compensation.

In some examples, the above block S23 can be: determining a first link delay corresponding to the first path according to the first time point, the request delay, a second time point corresponding to the first path and a reply delay corresponding to the first path; and determining a second link delay corresponding to a further path according to the first time point, the request delay, a second time point corresponding to the further path, a reply delay corresponding to the further path, and the first link delay. The further path is a path other than the first path in the target path group.

Figure 3 is still taken as an example. The first path is path 1, and the first time point is tc_R_1, the second time point is tc_A_i, i=1,..., n. For path 1, the first node CN can use the following formula (4) to calculate the link delay FixD_1 corresponding to path 1, namely the first link delay.

$$FixD\_1 = [ ( tc\_A\_1\text{-}tc\_R\_1 ) - ( ActD\_Req\_1 + ActD\_Ack\_1 ) ]/2 \qquad (4)$$

In formula (4), ActD_Req_1 represents the request delay of the request packet Req_1, ActD_Ack_1 represents the reply delay corresponding to path 1.

After FixD_1 is calculated, for path i, i=2,..., n, the first node CN can use the following formula (5) to calculate the link delay FixD_i corresponding to path i, namely the second link delay.

$$FixD\_i = [ ( tc\_A\_i - tc\_R\_1 ) - ( ActD\_Req\_1 + ActD\_Ack\_i ) ] - FixD\_1 \qquad (5)$$

In formula (5), ActD_Req_1 represents the request delay of request packet Req_1, ActD_Ack_i represents the reply delay corresponding to path i.

After obtaining the link delay corresponding to each path, the first node CN can use the following formula (6) to calculate the compensation delay upper limit corresponding to each path.

$$Cap\_i = PthRefD - FixD\_i \qquad (6)$$

In formula (6), Cap_i represents the compensation delay upper limit corresponding to path i, PthRefD represents the reference delay corresponding to the path group, FixD_i represents the link delay corresponding to path i, i=1,..., n.

Through the above examples, the acquisition of the compensation delay upper limit can be realized without the need of clock synchronization between network domains, which makes the technical solution provided by the examples of the disclosure applicable to a wider range of large-scale deterministic network application scenarios.

In the example of the disclosure, the first node can also obtain the link delay in other ways, for example, the first node can use formula (4) to calculate FixD_1, and use the following Formula (7) to calculate FixD_i, i=2,..., n.

$$FixD\_i = ( tc\_A\_i\text{-}tc\_A\_1 ) + FixD\_1 \qquad (7)$$

In the example of the disclosure, the specific method of obtaining the link delay is not specified.

In some examples, under specified conditions, the first node can configure the reference delay, such as when calculating the compensation delay for the first time or before deterministic traffic deployment. In one example, the first node can determine the reference delay through the following ways: determining a second path from the target path group; calculating the sum value of a reply delay corresponding to the second path, a link delay corresponding to the second path, and a preset adjustment delay, to obtain the reference delay corresponding to the target path group.

In the example of the present disclosure, the second path can be any path in the target path group, for example, the second path can be a path in the target path group, via which the reply packet is received at the latest, that is, the longest path. The second path and the first path can be the same or different. The preset adjustment delay is a pre-configured adjustment delay corresponding to the second path. It is the delay to be adjusted selected in combination with engineering requirements such as link expansion, additional margin for new link length after fault recovery, and variable delay upper limit margin. In the absence of clock synchronization, the first node can use the following formula (8) to determine the reference delay.

$$PthRefD = FixD + ActD\_Ack + Tr \qquad (8)$$

In formula (8), PthRefD represents the reference delay corresponding to the target path group, FixD represents the link delay corresponding to the second path, ActD_Ack represents the reply delay corresponding to the second path, Tr represents the preset adjustment delay.

Taking the path group shown in Figure 3 including path 1 and path 2 as an example, the schematic decomposition diagram of the delay corresponding to the path group is shown in Figure 4. The first node CN sends a request packet to the second node HN through path 1. For path 1 and path 2, the transmission delay t_Req_1 from the first node CN to the second node HN is common and can be ignored. The transmission delay from the second node HN to the first node CN on path 1 is approximately the time point th_R_1 on the second node HN to the time point tc_A_1 on the first node CN.

Similarly, the transmission delay from the second node HN to the first node CN on path 2 is approximately the time point th_R_1 on the second node to the time point tc_A_2 on the first node CN. As can be seen from Figure 4, tc_A_2 is later than tc_A_1, the path 2 corresponding to tc_A_2 is longer than the path 1 corresponding to tc_A_1, that is, path 2 is the longest path. Based on tc_A_2, the first node CN increases the adjustment delay Tr_ 2 selected by the user or controller according to the engineering needs, to obtain the reference time point tr. Based on this, the reference delay PthRefD is the time point th_R_1 on the second node HN to the reference time point tr on the first node CN, that is, PthRefD = FixD_2+ActD_Ack_2+Tr_2, FixD_2 represents the link delay corresponding to path 2, ActD_Ack_2 represents the reply delay corresponding to path 2.

In the example of the disclosure, after the first node obtains the reference delay corresponding to target path group, it can send the reference delay corresponding to target path group to the second node. In this way, when the first node subsequently sends data packets to the second node through the path in the target path group, the second node can quickly obtain the reference delay and perform delay compensate the on data packets. Alternatively, the second node can quickly update the compensation delay upper limit corresponding to each path included in the target path group in the second node according to the received reference delay.

In some examples, as shown in Figure 5, the first node can use the following blocks to generate a request packet periodically to achieve the periodic update of the compensation delay upper limit.

Block S51, generating an original packet according to a preset period.

Block S52, determining one path from a target path group as the first path.

Block S53, processing the original packet based on the tunnel information of the first path to obtain the request packet.

In the example of the disclosure, since the link delay is asymptotically affected by environmental changes and has an accumulation process, it is feasible to periodically update the compensation delay upper limit. While the reference delay PthRefD can remain unchanged, the compensation delay upper limit is adjusted with the change of the link delay, and the compensation delay is adjusted with the change of the link delay. Therefore, within the bounded delay range, the application will not perceive the cumulative change.

For the scenario of path failure, when a failure occurs, the application cannot perceive the change of delay as long as not all paths in the path group fail. After path recovery, as long as the new path length does not exceed the reference delay PthRefD, the application will not be aware of the path failure, which improves the reliability of service transmission.

In the above block S51, the preset period is the refresh period of the compensation delay upper limit. The value of the preset period depends on the accuracy of the business and the speed of environmental change. The higher the accuracy of the business, the faster the environment changes, and the shorter the preset period.

In some examples, a first timer event is registered in the first node. The first timer event is a timer event, which is to indicate the refresh of the compensation delay upper limit. The first timer corresponding to the first timer event has been started. The duration for the first timer is the preset period, that is, the refresh period of the compensation delay upper limit. After the first timer times out, it indicates that the refresh time of the compensation delay upper limit has been reached. The first node obtains the first timer event corresponding to the first timer, generates the original packet based on the first timer event, and resets the first timer. In this way, when the first timer times out again, the compensation delay upper limit will continue to be refreshed.

In the example of the disclosure, the first node can also manage the preset period in other ways, which is not limited.

In the above block S52, the first node can determine a path from the target path group as the first path according to the preset period. For example, after the first timer times out, the first node determines a path from the target path group as the first path. See the relevant description in the above block S21 for the specific definition method.

The example of the disclosure does not limit the execution order of blocks S51 and S52.

In block S53 above, the processing of the original packet includes but is not limited to querying an outgoing interface, packet re-encapsulating, etc. After determining the first path, the first node obtains the tunnel information issued by a control plane, such as the tunnel identifier of the first path. Based on the tunnel information of the first path, the original packet is processed to obtain a request packet. Furthermore, the first node executes block S21 and sends the request packet to the second node through the first path.

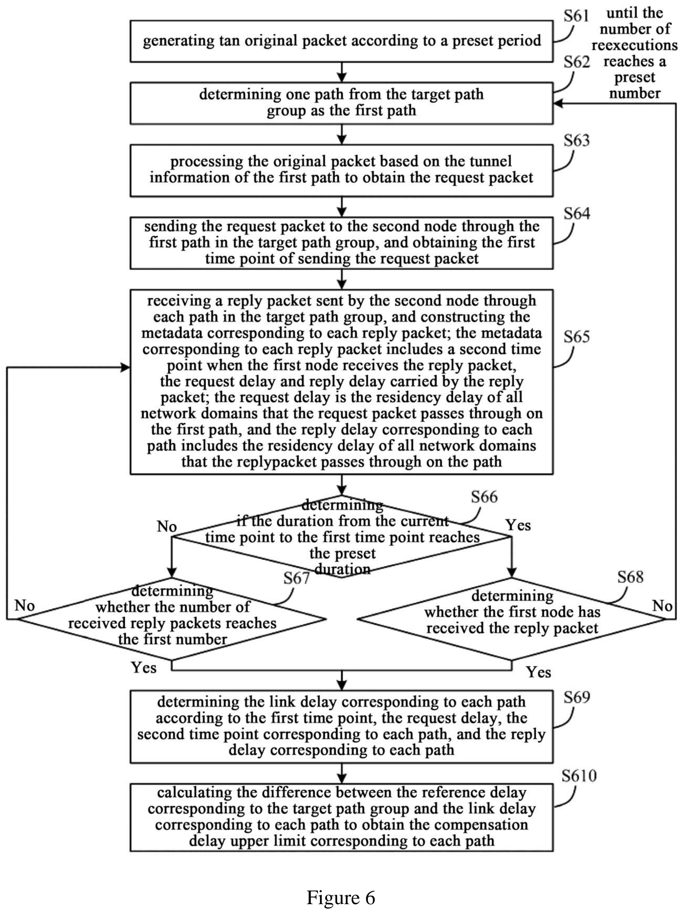

In some examples, the first node is configured with a preset duration, which is a timeout duration of receiving the reply packet. The preset duration can be determined based on the length of the path. The longer the path length, the longer the preset duration. For ease of description, the number of paths included in the target path group is referred to as the first number. Based on the examples shown in Figures 5 and 2, the example of the disclosure also provides a method for obtaining a compensation delay upper limit, as shown in Figure 6, which may include the following blocks.

Block S61, generating an original packet according to a preset period.

Block S62, determining one path from the target path group as a first path.

Block S63, processing the original packet based on the tunnel information of the first path to obtain the request packet.

Block S64, sending the request packet to a second node through the first path in the target path group, and obtaining a first time point of sending the request packet.

Block S65, receiving a reply packet sent by the second node through each path in the target path group, and constructing metadata corresponding to each reply packet; wherein the metadata corresponding to each reply packet includes a second time point when the first node receives the reply packet, the request delay and the reply delay carried in the reply packet; the request delay is the residency delay of all network domains that the request packet passes through on the first path, and the reply delay corresponding to each path includes the residency delay of all network domains that the reply packet passes through on the path.

Block S66, determining if a duration from the current time point to the first time point reaches the preset duration. If no, executing block S67. If yes, executing block S68.

In the example of the disclosure, the current time point is a time point when executing block S66. In addition, the example of the disclosure does not limit the execution order of blocks S65 and S66.

In some examples, after sending a request packet, the first node can register a second timer event in the first node and start a second timer corresponding to the second timer event. The duration for the second timer is a preset duration. The second timer event is a timer event to indicate the timeout duration of receiving the reply packet, which is the preset duration. Based on the second timer, the first node can determine in real time whether the second timer has timed out; if the second timer has not timed out, the first determining result is obtained, which indicates that the duration from the current time point to the first time point has not reached the preset duration; if the second timer times out, a second determining result is obtained, which indicates that the duration from the current time point to the first time point reaches the preset duration.

In the example of the disclosure, the first node can also manage the preset duration in other ways, which is not limited.

Block S67, determining whether the number of received reply packets reaches the first number. If no, executing block S65. If yes, executing block S69.

Block S68, determining whether the first node has received the reply packet. If no, executing block S62 until the number of times of re-executions of block S62 reaches a preset number of times. If yes, executing block S69.

In the example of the disclosure, the preset number of times are less than the number of paths included in the target path group. In one example, to avoid service interruption, the preset number of times is the number of paths included in the target path group - 1. In another example, in order to provide protection services to the first node and the second node, the preset number of times is the number of paths included in the target path group - 2. The preset number of times can also be other values, which is not limited.

When the duration from the current time point to the first time point reaches the preset duration and block S68 needs to be executed, it is indicated that there is a fault path. In order to ensure the accuracy of the compensation delay upper limit obtained subsequently, and realize that the service will not be aware of the delay change, as well as deterministic transmission, the premise of executing block S69 is that the first node has configured the reference delay, such as the reference delay calculated according to the above formula (8). That is, the first node can also determine whether the first node has configured the reference delay. When the duration from the current time point to the first time point reaches the preset duration, at least one reply packet is received, and the first node has configured the reference delay, then executing block S69. If the first node has not configured the reference delay, the obtaining process of the compensation delay upper limit will be ended.

In some examples, when the duration from the current time point to the first time point reaches the preset duration, if the first node has not configured the reference delay when the determining result that the first node receives the reply packet is obtained by executing block S68, the first node can remove the path, via which no reply packet has been received, from the target path group, and then continue to execute block S69, and calculate and update the reference delay.

In the example of the disclosure, when the first node uses the second timer to manage the preset duration, if the first node does not receive the reply packet, return to block S62, reset the second timer, and restart the second timer when sending the request packet again.

Block S69, determining the link delay corresponding to each path according to the first time point, the request delay, the second time point corresponding to each path, and the reply delay corresponding to each path;

Block S610, calculating the difference between the reference delay corresponding to the target path group and the link delay corresponding to each path, to obtain the compensation delay upper limit corresponding to each path.

In the technical solution provided by the example of the disclosure, after executing block S64 and sending the request packet, the first node can determine in real time whether the duration from the current time point to the first time point reaches the preset duration, and obtain the determining result.

If the determining result indicates that the preset duration has not been reached and a first number of reply packets have been received, it means that the reply packets transmitted through all paths have been received. The first node executes block S69, determining the link delay corresponding to each path according to the first time point, the request delay, the second time point corresponding to each path, and the reply delay corresponding to each path, and then calculating the compensation delay upper limit corresponding to each path.

If the determining result indicates that the preset duration has not been reached and the number of received reply packets has not reached the first number, then return to block S65 and continue waiting for receiving reply packets.

If the determining result indicates that the preset duration has been reached and no reply packet has been received, it indicates that the current first path is blocked. Then, the first node executes block S62 again, selecting a new first path, and continuing to send the request packet. When the number of repetitions of block S62 reaches the preset number, it indicates that the target path group is unable to provide service, and the process of obtaining the compensation delay upper limit ends. After completing the process of obtaining the compensation delay upper limit, the first node can output a prompt to enable the user to repair the target path group in a timely manner and restore business communication between the first node and the second node.

If the determining result indicates that the preset duration has been reached and at least one reply packet has been received, such as receiving a second number of reply packets, and the second number is less than the first number, then based on the received reply packet, executing block S69 to determine the link delay corresponding to the path transmitting each received reply packet based on the first time point, the request delay, the second time point corresponding to the path transmitting each received reply packet, and the reply delay corresponding to the path transmitting each received reply packet. For example, for each path receiving the reply packet, calculate the link delay and compensation delay upper limit corresponding to the path according to the above formulas (4) to (7).

By adopting the above example, the compensation delay upper limit is obtained and updated under the scenario of partial path failure, which expands the application scenario and further improves the reliability of the deterministic network.

In some examples, the metadata corresponding to each reply packet can further include the sequence number of the reply packet. After receiving the reply packet, the first node can compare the sequence number of the reply packet with the sequence number of the request packet. If the sequence number of the reply packet is the same as that of the request packet, it means that the reply packet is the reply packet of the request packet. If the sequence number of the reply packet is different from that of the request packet, it means that the reply packet is not the reply packet of the request packet.

In addition, for the convenience of description, the sum value of the request delay and the reply delay corresponding to the path of transmitting the reply packet is referred to as the target sum value for short. After receiving the reply packet, the first node can also compare the target sum value with the preset duration, which is the timeout duration of receiving the reply packet. If the target sum value is less than the preset duration, it means that the reply packet is the reply packet of the current request packet. If the target sum value are greater than or equal to the preset duration, it means that the reply packet is not the reply packet of the current request packet.

Combining the above two conditions, the first node can accurately calculate the link delay corresponding to each path.

For example, after receiving a reply packet, if the sequence number of the reply packet is the same as that of the request packet, and the sum value of the request delay and the reply delay corresponding to the path of transmitting the reply packet is less than the preset duration, the first node can use the reply packet to execute block S23 to determine the link delay corresponding to the path of transmitting the reply packet.

For another example, after receiving a reply packet, if the sequence number of the reply packet is different from that of the request packet, and/or the sum value of the reply delay corresponding to the path of transmitting the reply packet and the request delay is equal to or greater than the preset duration, the first node can discard the reply packet and end the processing process of the reply packet.

In the example of the disclosure, after receiving a reply packet, the first node can directly calculate the compensation delay upper limit and the link delay corresponding to the path of transmitting the reply packet, so as to improve the real-time performance of the compensation delay upper limit. After receiving the first number of reply packets or the timeout duration of receiving the reply packet has been reached, the first node can also calculate the compensation delay upper limit and the link delay corresponding to the path of transmitting the reply packet, so as to avoid long-term occupation of the computing resources of the first node and improve the resource utilization of the first node.

In the example of the disclosure, if the first node calculates the compensation delay upper limit and link delay corresponding to the path of transmitting each reply packet after receiving the first number of reply packets or the timeout duration of receiving the reply packet has been reached, then when the number of received reply packets is less than the first number and the received reply packets are received before timeout, the metadata corresponding to each reply packet is recorded.

In the example of the disclosure, in order to facilitate the acquisition of the compensation delay upper limit, the first node can be configured with a first table and a second table associated with the first table; the first table is to record the first configuration information of the target path group issued by a controller, and the second table is to record the second configuration information of each path included in the target path group issued by the controller. The controller can be an SDN (Software Defined Network) controller or other types of controllers. The controller implements a control plane for networking, can generate path groups based on global planning, and configure the configuration information of the relevant path planning to the first node and the second node.

The first configuration information mentioned above may include but is not limited to: the identifier of the target path group, the number of paths included in the target path group, the address of the second node, the preset adjustment delay, the reference delay, the period of sending the request packet, the timeout duration of receiving the reply packet, and a first pointer, etc, where the first pointer points to the first address of the second table.

The second configuration information mentioned above may include but is not limited to: the identifiers of the paths included in the target path group, the identifier of the receiving interface for receiving the reply packet, the tunnel identifier for sending the request packet, and the compensation delay upper limit.

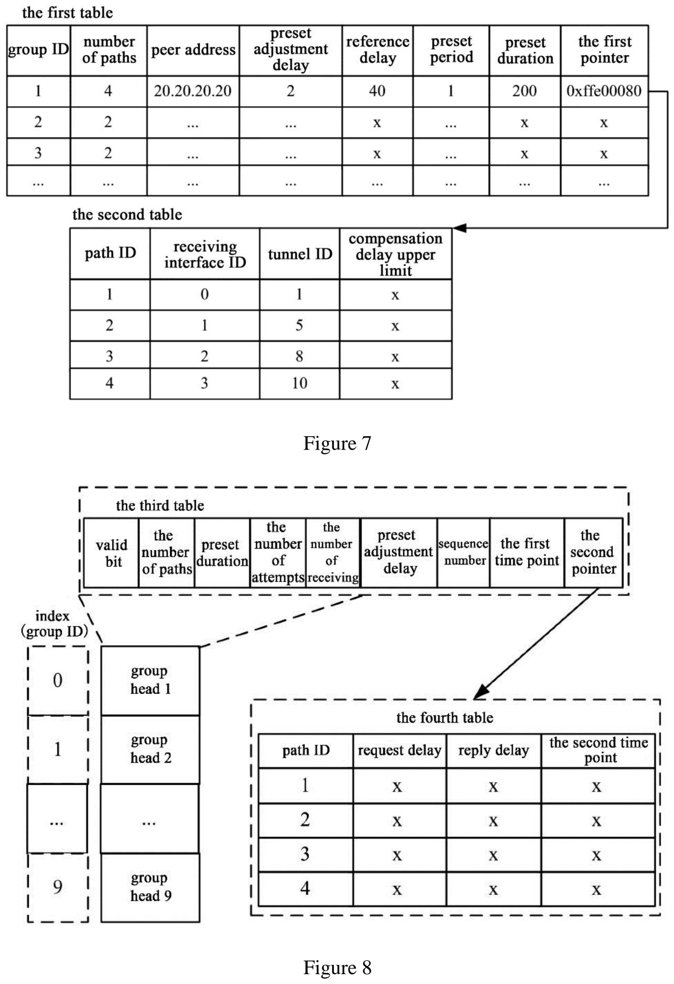

The structures of the first table and the second table can be shown in Figure 7. In Figure 7, one row of the first table is a table entry, filled with the first configuration information of a path group, and one row of the second table is a table entry, filled with the second configuration information of a path, wherein the path is a path in a path group indicated by a table entry associated with the second table in the first table.

In the first table shown in Figure 7, the Group ID represents the protection service group ID, which is the identifier of the target path group, such as the numbers 1, 2, 3, etc. in the Group ID column in Figure 7. The Group ID uniquely identifies a path group, wherein each member in the path group is an independent path and logically forms ECMP (Equal Cost Multi Path). During business transmission, multiple paths within the path group simultaneously transmit different copies of the same deterministic business flow's data packets to increase reliability.

The number of paths (PathCnt) represents the total number of paths included in the target path group, such as the numbers 4, 2, etc. in the column of the number of paths in Figure 7. The number of paths in the first row of the first table is 4, indicating that the corresponding path group 1 includes 4 paths.

Peer address represents the IP address of a peer node. When the local node is the first node, the peer address is the IP address of the second node. When the local node is the second node, the peer address is the IP address of the first node, the peer address in Figure 7 is 20.20.20.20.

The preset adjustment delay (Adjustment) represents the compensation delay that the protection service group needs to adjust, that is, the adjustment delay of the second path in the target path group, as shown in above Tr_2. In Figure 7, the preset adjustment delay for path group 1 is 2ms (milliseconds), indicating a delay of 2ms (milliseconds) based on at the latest arrival time point as the compensation delay upper limit. In the example of the disclosure, the preset adjustment delay can be selected with a relatively large value. In this way, when a path in the path group fails and is updated to another path, the reference delay PthRefD is not changed, so that the business does not perceive the change. 2ms can support a link delay of 400 kilometers, allowing the new link to be 400 kilometers longer than the longest path in path group 1.

The reference delay (PthRefD) represents the reference delay corresponding to the target path group. In the example of the disclosure, the first node can calculate the reference delay after detection, and then update the reference delay to the first table. Optionally, the first node can calculate the reference delay after the first detection and update the first table. In the first table, the initial value of the reference delay is a specified value, such as 0. When the reference delay is 0, it means that the first node has not configured the reference delay, and the first node has not yet detected the reference delay. In Figure 7, the preset adjustment delay of path group 1 is 40ms.

The period of sending a request packet (TimerInterval) refers to the detection period of timing detection of a packet (such as a request packet), such as the preset period above. In Figure 7, the period of sending a request packet corresponding to path group 1 is 1s (second).

The timeout duration (TimeOut) of receiving a reply packet represents the timeout duration of each detection of a packet (such as a reply packet), as the preset duration above. For some reasons, the path may be blocked. If the preset duration is exceeded, the first node will not continue to wait. In Figure 7, the period of sending a reply packet corresponding to path group 1 is 200ms.

The first pointer (PathInfoPtr) represents the address of the path information set. The first pointer points to the first address of the second table, that is, the first address of the path information set (PathInfoTbl) of the path group. In Figure 7, the first address of the second table corresponding to path group 1 is 0xffe00080.

The second table shown in Figure 7 can include the following second configuration information:
The path identifier (Path ID, i.e., PathID) represents the identifiers of the paths included in the corresponding target path group, such as the numbers 1, 2, 3, and 4 in the path identifier column as shown in Figure 7, which indicates that path group 1 includes path 1, path 2, path 3, and path 4.

The receiving interface ID (IntfID) represents the receiving interface ID of the receiving reply packet, such as the numbers 0, 1, 2, and 3 in the receiving interface ID column as shown in Figure 7.

The tunnel identifier (Tunnel ID, i.e., TunnelID) refers to the tunnel identifier of the node that sends the request packet, for sending the request packet, such as the numbers 1, 5, 8 and 10 in the tunnel ID column as shown in Figure 7.

The compensation delay upper limit (Cap) represents the learned value of the compensation delay upper limit. In the example of the disclosure, after obtaining the compensation delay upper limit corresponding to each path, the first node can update the second table, that is, the compensation delay upper limit corresponding to each path in the second table is updated with the obtained compensation delay upper limit.

The forwarding node can obtain the peer address, tunnel ID and other tunnel information from the first table and the second table. Based on these tunnel information, the forwarding node can query the outgoing interface, re-encapsulate the packet, etc. for the packet, to obtain the request packet or data packet to be forwarded, and then send the request packet or data packet to the peer. In the first table and the second table, the reference delay and the compensation delay upper limit are updated after the first node and the second node carry out detection and learning according to the example shown in Figure 2 to Figure 6 above, and other information is configured and issued by the control plane.

In the example of the disclosure, a third table and a fourth table associated with the third table can be configured in the first node to facilitate the acquisition of the compensation delay upper limit. The third table and the fourth table are to record the relevant information of the target path group in the process of acquiring the compensation delay upper limit, for example, the third table is to record the third configuration information of the target path group, and the fourth table is to record the fourth configuration information, for obtaining the compensation delay upper limit, corresponding to each path included in the target path group. The third configuration information can be the same as the first configuration information, or it can be part of the first configuration information, or it can be different from the first configuration information. The fourth configuration information can be the same as the metadata corresponding to the reply packet, or it can be part of the metadata corresponding to the reply packet.

In this case, before sending the request packet to the second node, the first node can obtain the third configuration information of the target path group and fill the third configuration information into the third table. In addition, after obtaining the metadata corresponding to the reply packet, fill the fourth configuration information corresponding to the metadata into the fourth table. In order to save the table entry resources of the first node, after obtaining the compensation delay upper limit, recover the third and fourth tables corresponding to the target path group, for example, recover the table entries corresponding to the target path group in the third table, and the fourth table associated with the table entries, which can also be expressed as recovering the resources corresponding to the target path group in the third and fourth tables, so as to reuse these resource records to obtain the relevant information in the process of obtaining the compensation delay upper limit corresponding to other path groups. When the resources corresponding to the target path group in the third table and the fourth table need to be recycled, the third configuration information in the third table can further include the valid bit. When the valid bit is a first preset value, it indicates that the corresponding table entry is occupied to record the relevant information of the target path group; When the valid bit is a second preset value, it means that the corresponding table entry is not occupied. When a new process of obtaining the compensation delay upper limit is started, the first node can occupy the table entry where the valid bit is located to record relevant information. The first preset value and the second preset value can be set according to actual needs, for example, the first preset value is 1, and the second preset value is 0.

In the example of the disclosure, the third configuration information can include, but is not limited to, the identifier of the target path group, the number of paths included in the target path group, the timeout duration of receiving the reply packet, the number of paths trying to send the request packet, the number of paths receiving the reply packet, the preset adjustment delay, the sequence number of the request packet, the first time point, and the second pointer, etc. The second pointer points to the first address of the fourth table. Multiple parameters of the third configuration information form a vector. The fourth configuration information may include, but is not limited to, the identifier of the path included in the target path group, the request delay, the reply delay, the second time point, etc.

The structures of the third table and the fourth table can be shown in Figure 8. In Figure 8, one line of the third table is a table entry, which is to be filled with the third configuration information of a path group, and one line of the fourth table is a table entry, which is to be filled with the metadata corresponding to the reply packet transmitted by a path. The path is a path in the path group indicated by the table entry associated with the fourth table in the third table.

The third table shown in Figure 8 includes 10 table entries. Each table entry records the public information of a path group, that is, the above third configuration information. One table entry of the third table can be called the group head (GroupHead) of the path group. For each group head, the following information can be included.

The valid bit (Valid) represents the validity of the vector recorded in a group head. For example, if the valid bit is 1, it means that the vector recorded in the group head is valid; if the valid bit is 0, it means that the vector recorded in the group head is invalid, and the relevant information of the path group of the delay compensation upper limit can be updated by new learning.

The group identifier (Group ID) indicates the protection service group ID, that is, the target path group ID. See the group ID in the first table above for details. For end-to-end services, the number of path groups providing protection services is limited. In the example of the disclosure, each path group can be allocated with a fixed table entry resource of the third table. At this point, the group ID parameter can be omitted from the third table, and the index of each group head (i.e. table entry) can be used as the group ID. As shown in Figure 8, the number of path groups providing protection services is 10, the group head of the third table omits the group identifier, and the indexes 1 to 10 of each table entry are respectively used as the group identifier of the path group indicated by the table entry.

The number of paths (PathCnt) represents the total number of paths included in the target path group, see the number of paths in the first table above for details. The number of paths can be used to indicate the respective table entry resources and create the associated fourth table.

The timeout duration (TimeOut) of receiving a reply packet represents the timeout duration of each detection of a packet (such as a reply packet). See the timeout duration of receiving a reply packet in the first table above for details.

The number of attempts, that is, the number of paths trying to send a request packet (TryPathNum), represents the number of paths trying to send the request packet in the target path group. The first node may re-send the request packet via a different path due to the current path is blocked, and the number of times to execute the re-sending of the request packet reaches a specified number of times.

The number of receiving, i.e., the number of paths (RecvPathCnt) of receiving a reply packet, represents the number of received reply packets. When a certain number of paths are reached, the corresponding calculation can be carried out to obtain the compensation delay upper limit.

The preset adjustment delay (Adjustment) represents the compensation delay that the protection service group needs to be adjusted. See the preset adjustment delay in the first table above for details.

The sequence number (SeqNum) of a request packet represents the sequence number of the request packet when obtaining the compensation delay upper limit. The sequence numbers of all reply packets for the same request packet are the same. Therefore, the sequence number of the request packet is the sequence number of the reply packet.

The time point (tc_Req) of sending a request packet represents the time point when the first node sends the request packet, such as the first time point above.

The second pointer (PathInfoPtr) represents a set of path information addresses. The first pointer points to the first address of the fourth table, that is, the first address of a set of path information (PathInfo). The path information is the fourth configuration information. One path group includes at least two paths. In Figure 8, take one path group including four paths as an example. The fourth configuration information (i.e. path information) that can be included in the fourth table can include the followings.

The path ID (PathID) represents the identifiers of the paths included in the corresponding target path group. See the path ID in the second table above for details.

The request delay (ActD_Req) represents the variable delay for the passing of a request packet, that is, the cumulative residency delay of all network domains that the request packet passes through on the path.

The reply delay (ActD_Ack) represents the variable delay for the passing of a reply packet, that is, the cumulative residency delay of all network domains that the reply packet passes through on the path.

The time point (tc_A) of receiving a reply packet represents the time point when the reply packet reaches the first node, such as the second time point mentioned above. The reply packets for the same request packet sent by the second node through different paths may arrive at CN at different times.

In some examples, the packet sent by the second node to the first node through a third path in the target path group includes a reply packet and a data packet. The third path can be any path in the target path group, which can be the same as or different from the first path.

In this case, after the first node receives a packet sent by the second node through the third path, it can identify the received packet. If the received packet is identified as a reply packet, the first node executes an operation of constructing the metadata corresponding to each reply packet, and then determines the compensation delay upper limit and the link delay corresponding to the third path. If the received packet is identified as a data packet, the first node will perform delay compensation on the data packet according to the compensation delay upper limit corresponding to the third path.

In the example of the disclosure, the compensation delay upper limit corresponding to the third path can be the compensation delay upper limit stored in the first node. For example, the first node queries the compensation delay upper limit corresponding to each path recorded locally in the first node to obtain the compensation delay upper limit corresponding to the third path. The compensation delay upper limit corresponding to the third path can also be the compensation delay upper limit carried in the data packet. For example, the first node extracts the compensation delay upper limit corresponding to the third path from the received data packet. The compensation delay upper limit can be sent by the first node to the second node, or obtained by the second node with the method shown in Figure 2 above.

In addition, the example of the disclosure does not specifically define the mode of delay compensation. For example, the first node can obtain the compensation delay upper limit corresponding to the third path, and obtain the sum value of the residency delays of all network domains that the data packet passes through on the third path, as a target residency delay, calculate the difference between the compensation delay upper limit corresponding to the third path and the target residency delay, as a current compensation delay; after delaying the data packet by the current compensation delay, schedule the data packet. The target residency delay can be carried in the data packet.

In the technical solution provided by the example of the disclosure, the first node performs delay compensation on data packets based on the accurate compensation delay upper limit, which can effectively eliminate jitter, reduce the jitter of end-to-end services, and ensure the deterministic transmission of end-to-end services.

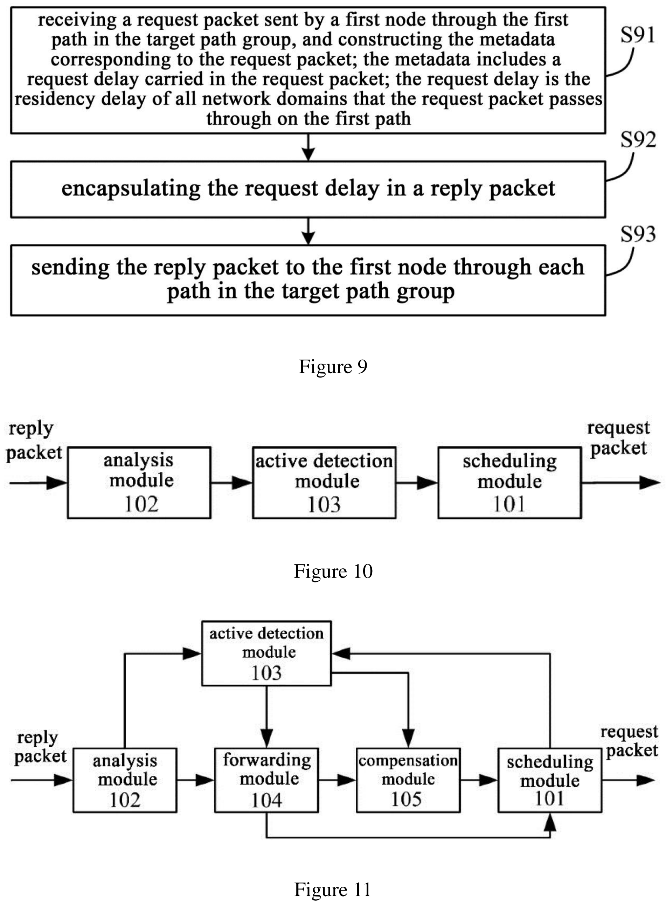

Based on the above method for obtaining a compensation delay upper limit applied to the first node, the example of the disclosure also provides a method for obtaining a compensation delay upper limit, as shown in figure 9. The method is applied to a second node connected to a first node through a target path group including multiple paths, and the method comprises the following blocks.

Block S91, receiving a request packet sent by the first node through a first path in the target path group, and constructing metadata corresponding to the request packet; wherein the metadata includes a request delay carried in the request packet; the request delay is the residency delay of all network domains that the request packet passes through on the first path.

In some examples, the request packet carries a first field, which is to be filled with the request delay.

Block S92, encapsulating the request delay in a reply packet.

In some examples, the reply packet carries a second field and a third field. The second field is to be filled with the request delay, and the third field is to be filled with the reply delay. The reply delay includes the residency delay of all network domains that the reply packet passes through on the path.

Block S93, sending the reply packet to the first node through each path in the target path group.

The first node receives the reply packet sent by the second node through each path in the target path group, and constructs the metadata corresponding to each reply packet. The metadata includes a second time point when the first node receives the reply packet, the request delay and the reply delay carried in the reply packet. The request delay is the residence delay of all network domains that the request packet passes through on the first path, The reply delay corresponding to each path includes the residency delay of all network domains that the reply packet passes through on the path; determines the link delay corresponding to each path according to the first time point, the request delay, the second time point corresponding to each path and the reply delay corresponding to each path; calculates the difference between the reference delay corresponding to the target path group and the link delay corresponding to each path, to obtain the compensation delay upper limit corresponding to each path.

In the technical solution provided by the example of the disclosure, the first node sends a request packet to the second node through a path in the target path group; the second node sends a reply packet to the first node through each path in the target path group. The request packet and reply packet are transmitted along a path in the target path group, pass through all network domains on the path, and then the request packet and reply packet can be filled with the residency delay of all network domains on the path. Based on this, based on the request packet and the reply packet, the first node can obtain the first time point when the first node sends the request packet, the second time point when the first node receives the reply packet, the request delay, and the reply delay corresponding to each path, and then accurately determine the link delay corresponding to each path based on the obtained information, and accurately determine the compensation delay upper limit corresponding to each path based on the accurate link delay. This enables the change of link delay to be reflected in the compensation delay. Based on the change of link delay, the compensation delay can be adjusted adaptively. That is, based on the accurate compensation delay upper limit, the delay compensation on data packets can effectively eliminate jitter, make the service not aware of the delay change caused by environment and other factors, and reduce the jitter of end-to-end services, for example, it reduces the jitter between the first node and the second node of the target path group, ensures the deterministic transmission of end-to-end services, and improves the reliability of service transmission.

In addition, in the technical solution provided by the example of the present disclosure, only time synchronization in the network domain is required to accurately obtain the residency delay in each network domain, and then accurately obtain the compensation delay upper limit, without the need of time synchronization between domains, which reduces the difficulty of solution implementation, facilitates wide application, and improves the accuracy of delay compensation.

In some examples, the metadata of the request packet can further include a third time point, which is the time point when the second node receives the request packet. In this case, the above block S92 can be as follows: calculating the delay from the third time point to the fourth time point as a processing delay, the fourth time point is the time point when the second node sends the reply packet, and the sum value of the processing delay and the residency delay of all network domains that the reply packet passes through on the path is the reply delay; encapsulating the request delay and processing delay in the reply packet.

In some examples, the above block S92 can be: generating the original packet corresponding to the request packet, wherein the original packet carries the request delay; processing the original packet, such as querying the outgoing interface for the original packet, re-encapsulating the original packet, based on the tunnel information of each path in the target path group, to obtain the reply packet corresponding to each path.

In the example of the disclosure, the tunnel information of each path in the target path group can be from the control plane. The first node generates a request packet periodically according to a preset period, and sends the request packet to the second node. Accordingly, the second node periodically receives the request packet, obtains the tunnel information of each path in the target path group, generates and sends a reply packet based on the tunnel information of each path in the target path group, and updates the compensation delay upper limit. Since the link delay is asymptotically affected by environmental changes and has an accumulation process, it is feasible to periodically update the compensation delay upper limit. While the reference delay PthRefD can remain unchanged, the compensation delay upper limit is adjusted with the change of the link delay, and the compensation delay is adjusted with the change of the link delay. Therefore, within the bounded delay range, the application will not perceive the cumulative change.

For the scenario of path failure, when a failure occurs, the application cannot perceive the change of delay as long as not all paths in the path group fail. After path recovery, as long as the new path length does not exceed the reference delay PthRefD, the application will not be aware of the path failure, which improves the reliability of service transmission.

In some examples, the second node is configured with a first table and a second table associated with the first table; the first table is to record the first configuration information of the target path group issued by a controller, and the second table is to record the second configuration information of each path included in the target path group issued by the controller. The first configuration information mentioned above may include but is not limited to: the identifier of the target path group, the number of paths included in the target path group, the address of the first node, the preset adjustment delay, the reference delay, the period of sending the request packet, the timeout duration of receiving the reply packet, and a first pointer, wherein the first pointer points to the first address of the second table. The second configuration information mentioned above may include but is not limited to: the identifiers of the paths included in the target path group, the identifier of the receiving interface for receiving the reply packet, the tunnel identifier for sending the request packet, and the compensation delay upper limit. The structures of the first table and the second table can be seen in the relevant description of the above Figure 7.

In some examples, the first node can send the calculated compensation delay upper limit and reference delay to the second node. If the compensation delay upper limit corresponding to each path sent by the first node is received, the second node updates the compensation delay upper limit corresponding to each path in the second table with the obtained compensation delay upper limit. If the reference delay corresponding to the target path group sent by the first node is received, the second node updates the reference delay in the first table with the calculated reference delay.

In this way, when the second node sends a data packet to the first node, it can determine the third path from the target path group, obtain the compensation delay upper limit corresponding to the third path, fill the compensation delay upper limit corresponding to the third path into the data packet, and send the data packet carrying the compensation delay upper limit corresponding to the third path to the first node through the third path. In this way, the first node can quickly obtain the compensation delay upper limit corresponding to the third path from the data packet, realize delay compensation, and improve the efficiency of delay compensation.

In some examples, in order to accurately process the packet and complete the acquisition of the compensation delay upper limit, the packet received by the second node includes a request packet and a data packet. After receiving the packet, the second node can identify the received packet. If the received packet is identified as the request packet sent by the first node, the second node executes an operation of constructing the metadata corresponding to the request packet, and then generates the reply packet to assist the first node in determining the link delay and compensation delay upper limit. If the received packet is identified as the data packet sent to the first node, the second node determines the third path from the target path group; sends data packet to the first node through the third path. The data packet can carry or not carry the compensation delay upper limit corresponding to the third path, which is not limited.

Based on the above method of obtaining a compensation delay upper limit, the example of the disclosure also provides a device for obtaining a compensation delay upper limit, as shown in Figure 10, which is applied to a first node connected to the second node through a target path group including multiple paths, and the device includes a scheduling module 101, an analysis module 102, and an active detection module 103;

the scheduling module 101 is to send a request packet to the second node through a first path in the target path group, and obtain a first time point when the first node sends the request packet; and submit the first time point to the active detection module 103;

the analysis module 102 is to receive a reply packet sent by the second node through each path in the target path group; each reply packet includes a request delay and a reply delay; the request delay is a residency delay of all network domains that the request packet passes through on the first path, and the reply delay corresponding to each path includes a residency delay of all network domains that the reply packet passes through on the path; construct metadata corresponding to each reply packet, and submit the metadata corresponding to each reply packet to the active detection module 103; the metadata corresponding to each reply packet includes a second time point when the first node receives the reply packet, the request delay and the reply delay carried in the reply packet;

the active detection module 103 is to determine a link delay corresponding to each path according to the first time point, the request delay, the second time point corresponding to each path, and the reply delay corresponding to each path; calculate a difference between a reference delay corresponding to the target path group and the link delay corresponding to each path to obtain the compensation delay upper limit corresponding to each path.

In the technical solution provided by the example of the disclosure, the first node sends a request packet to the second node through a path in the target path group; the second node sends a reply packet to the first node through each path in the target path group. The request packet and reply packet are transmitted along the path in the target path group, pass through all network domains on the path, and then the request packet and reply packet can be filled with the residency delay of all network domains on the path. Based on this, based on the request packet and reply packet, the first node can obtain the first time point when the first node sends the request packet, the second time point when the first node receives the reply packet, the request delay, and the reply delay corresponding to each path, and then accurately determine the link delay corresponding to each path based on the obtained information, and accurately determine the compensation delay upper limit corresponding to each path based on the accurate link delay. This enables the change of link delay to be reflected in the compensation delay. Based on the change of link delay, the compensation delay can be adjusted adaptively. That is, based on the accurate compensation delay upper limit, the delay compensation on data packets can effectively eliminate jitter, make the service not aware of the delay change caused by environment and other factors, and reduce the jitter of end-to-end services, for example, it reduces the jitter between the first node and the second node of the target path group, ensures the deterministic transmission of end-to-end services, and improves the reliability of service transmission.

In the example of the disclosure, the device for obtaining a compensation delay upper limit can correspond to one or more incoming interfaces and one or more outgoing interfaces. That is, the device for obtaining a compensation delay upper limit can process packets from one or more incoming interfaces and send packets to one or more outgoing interfaces.

In some examples, the active detection module 103 can be specifically to:

determine a first link delay corresponding to the first path according to the first time point, the request delay, a second time point corresponding to the first path, and a reply delay corresponding to the first path;

determine a second link delay corresponding to a further path according to the first time point, the request delay, a second time point corresponding to the further path, a reply delay corresponding to the further path, and the first link delay, wherein the further path is a path other than the first path in the target path group.

In some examples, the active detection module 103 can be further to :

determine a second path from the target path group;

calculate a sum value of a reply delay corresponding to the second path, a link delay corresponding to the second path and a preset adjustment delay, to obtain the reference delay corresponding to the target path group.

In some examples, the second path is a path in the target path group, via which the reply packet is received at the latest.

In some examples, the request packet carries a first field, which is to be filled with the request delay.

In some examples, the reply packet carries a second field and a third field, the second field is to be filled with the request delay, and the third field is to be filled with the reply delay.

In some examples, the reply delay corresponding to each path is a sum value of a processing delay and the residency delay of all network domains that the reply packet passes through on the path; the processing delay is a delay from a third time point to a fourth time point; the third time point is a time point when the second node receives the request packet, and the fourth time point is a time point when the second node sends the reply packet.

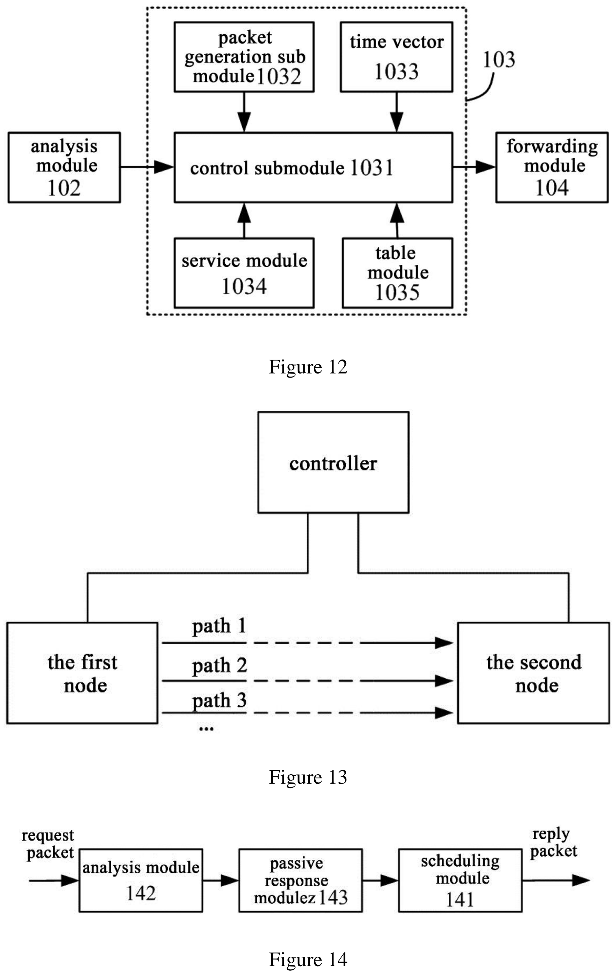

In some examples, as shown in Figure 11, the above device for obtaining a compensation delay upper limit can further include a forwarding module 104. As shown in Figure 12, the active detection module 103 may include a control submodule 1031 and a packet generation submodule 1032;

the packet generation submodule 1032 is to generate an original packet according to a preset period and send the original packet to the control submodule;

the control submodule 1031 is to obtain the original packet and determine one path from the target path group as the first path to send the tunnel information of the first path and the original packet to the forwarding module 104;

the forwarding module 104 is to process the original packet based on the tunnel information of the first path to obtain the request packet, and send the request packet to the scheduling module 101.

In some examples, as shown in Figure 12, the active detection module 103 can further include a time vector 1033. A first timer event is registered in the time vector 1033, and a duration for the first timer is the preset period;

the control submodule 1031 is further to obtain the first timer event from the time vector after the first timer times out, send the first timer event to the packet generation submodule 1032, and reset the first timer;

the packet generation submodule 1032 is specifically to generate the original packet based on the first timer event after obtaining the first timer event.

In some examples, the control submodule 1031 can be further to:

after sending the request packet, determine whether a duration from a current time point to the first time point reaches a preset duration to obtain a determining result;

if the determining result indicates that the preset duration has not been reached and a first number of reply packets have been received, execute an operation of determining the link delay corresponding to each path according to the first time point, the request delay, the second time point corresponding to each path, and the reply delay corresponding to each path, wherein the first number is the number of paths included in the target path group;

if the determining result indicates that the preset duration has been reached and no reply packet has been received, re-execute an operation of determining one path from the target path group as the first path, until the number of times of re-executions reaches a preset number of times;

if the determining result indicates that the preset duration has been reached and at least one reply packet has been received, determine a link delay corresponding to a path transmitting each received reply packet based on the first time point, the request delay, a second time point corresponding to the path transmitting each received reply packet, and a reply delay corresponding to the path transmitting each received reply packet.

In some examples, the control submodule is specifically to: determine whether the first node has configured the reference delay; if the determining result indicates that the preset duration has been reached, at least one reply packet has been received, and it is determined that the first node has configured the reference delay, determine the link delay corresponding to the path transmitting each received reply packet based on the first time point, the request delay, the second time point corresponding to the path transmitting each received reply packet, and the reply delay corresponding to the path transmitting each received reply packet.

In some examples, as shown in Figure 12, the active detection module 103 can further include a time vector 1033, and the control submodule 1031 can be further to:

after sending the request packet, register a second timer event in the first node and starting a second timer corresponding to the second timer event; wherein a duration for the second timer is the preset duration;

determine whether the second timer has timed out;

if the second timer has not timed out, obtain a first determining result, which indicates that the duration from the current time point to the first time point does not reach the preset duration;

if the second timer has timed out, obtain a second determining result, which indicates that the duration from the current time point to the first time point reaches the preset duration.

In some examples, the metadata corresponding to each reply packet can further include the sequence number of the reply packet;
the active detection module 103 can be further to determine the link delay corresponding to each path according to the first time point, the request delay, the second time point corresponding to each path and the reply delay corresponding to each path if the sequence number of the reply packet is the same as a sequence number of the request packet, and a sum value of the request delay and a reply delay corresponding to a path transmitting the reply packet is less than the preset duration.

In some examples, the metadata corresponding to each reply packet can further include the sequence number of the reply packet;
the active detection module 103 can be further to discard a reply packet if the sequence number of the reply packet is different from a sequence number of the request packet, and/or a sum value of a reply delay corresponding to the path transmitting the reply packet and the request delay is greater than or equal to a preset duration.

In some examples, the active detection module 103 is configured with a first table and a second table associated with the first table; the first table is to record first configuration information of the target path group issued by a controller, and the second table is to record second configuration information of each path included in the target path group issued by the controller.

In the example of the disclosure, the first table and the second table are configured in one module, as shown in the service module 1034 shown in Figure 12. The first table and the second table are configured in different modules, which are not limited. The first table and the second table can be issued by a controller to the first node. For the end-to-end service networking as shown in Figure 13, multiple paths are established between the first node and the second node, such as the paths 1 to 3 in Figure 13. These paths constitute a path group that provides protection services. The controller is located in the control plane and issues the path related information to the first node, and then the first node stores the path related information to the first table and the second table, so as to realize the measurement and adaptive adjustment of the reference delay in coordination with each functional module in the first node and the second node.

In some examples, the first configuration information mentioned above may include but is not limited to: an identifier of the target path group, the number of the paths included in the target path group, an address of the second node, a preset adjustment delay, the reference delay, a period of sending the request packet, a timeout duration of receiving the reply packet, and a first pointer, wherein the first pointer points to a first address of the second table; and/or

the second configuration information mentioned above may include but is not limited to: identifiers of the paths included in the target path group, an identifier of a receiving interface for receiving the reply packet, tunnel identifier for sending the request packet, and the compensation delay upper limit;

the active detection module 103 can be further to: after obtaining the compensation delay upper limit corresponding to each path, update a compensation delay upper limit corresponding to each path in the second table with the obtained compensation delay upper limit.

In some examples, the active detection module 103 can be further to: if the reference delay is calculated, update a reference delay in the first table with the calculated reference delay.

In some examples, the first node is configured with a third table and a fourth table associated with the third table; the third table is to record third configuration information of the target path group, and the fourth table is to record fourth configuration information, for obtaining the compensation delay upper limit, corresponding to each path included in the target path group;

the active detection module is further to: before the scheduling module sends the request packet to the second node, obtain the third configuration information of the target path group and filling the third configuration information into the third table; after obtaining the metadata, fill fourth configuration information corresponding to the metadata into the fourth table.

In the example of the disclosure, the third table and the fourth table are configured in one module, such as the table module 1035 shown in Figure 12. The third table and the fourth table are configured in different modules, which are not limited.

In some examples, the active detection module 103 can be further to: after obtaining the compensation delay upper limit, recover the third and fourth tables corresponding to the target path group.

In some examples, the third configuration information can include, but is not limited to: an identifier of the target path group, the number of the paths included in the target path group, a timeout duration of receiving the reply packet, the number of paths trying to send the request packet, the number of paths receiving the reply packet, a preset adjustment delay, a sequence number of the request packet, the first time point, and a second pointer; the second pointer points to a first address of the fourth table; and/or

the fourth configuration information may include, but is not limited to: identifiers of the paths included in the target path group, the request delay, the reply delay and the second time point.

In some examples, as shown in Figure 11, the above device for obtaining a compensation delay upper limit can further include a compensation module 105;

the analysis module 102 can be is further to: identify a received packet; if the received packet is identified as the reply packet corresponding to the request packet, construct the metadata corresponding to each reply packet, and submit the metadata corresponding to each reply packet to the active detection module 103; if the received packet is identified as a data packet, send the data packet to the compensation module 105;

the compensation module 105 is to perform delay compensation on the data packet according to a compensation delay upper limit corresponding to a third path, which is a path transmitting the data packet.

In some examples, the compensation delay upper limit corresponding to the third path is the compensation delay upper limit issued by the active detection module to the compensation module after obtaining the compensation delay upper limit corresponding to each path; or

the compensation delay upper limit corresponding to the third path is the compensation delay upper limit carried in the data packet.

In some examples, the active detection module 103 can be further to send the obtained reference delay and/or the compensation delay upper limit corresponding to each path to the scheduling module 101;

the scheduling module 101 can be further to send the obtained reference delay and/or the compensation delay upper limit corresponding to each path to the second node.

Based on the above method of obtaining a compensation delay upper limit, the example of the disclosure also provides a device for obtaining a compensation delay upper limit, as shown in Figure 14, which is applied to a second node connected to a first node through a target path group including multiple paths, and the device includes a scheduling module 141, an analysis module 142, and a passive response module 143;

the analysis module 142 is to receive a request packet sent by the first node through a first path in the target path group, and obtain metadata of the request packet; wherein the metadata includes a request delay carried in the request packet; the request delay is a residency delay of all network domains that the request packet passes through on the first path; and submit the metadata to the passive response module 143;

the passive response module 143 is to encapsulate the request delay in a reply packet; and send the reply packet to the scheduling module;

the scheduling module 141 is to send the reply packet to the first node through each path in the target path group.

In the technical solution provided by the example of the disclosure, the first node sends a request packet to the second node through a path in the target path group; the second node sends a reply packet to the first node through each path in the target path group. The request packet and reply packet are transmitted along the path in the target path group, pass through all network domains on the path, and then the request packet and reply packet can be filled with the residency delay of all network domains on the path. Based on this, based on the request packet and reply packet, the first node can obtain the first time point when the first node sends the request packet, the second time point when the first node receives the reply packet, the request delay, and the reply delay corresponding to each path, and then accurately determine the link delay corresponding to each path based on the obtained information, and accurately determine the compensation delay upper limit corresponding to each path based on the accurate link delay. This enables the change of link delay to be reflected in the compensation delay. Based on the change of link delay, the compensation delay can be adjusted adaptively. That is, based on the accurate compensation delay upper limit, the delay compensation on data packets can effectively eliminate jitter, make the service not aware of the delay change caused by environment and other factors, and reduce the jitter of end-to-end services, for example, it reduces the jitter between the first node and the second node of the target path group, ensures the deterministic transmission of end-to-end services, and improves the reliability of service transmission.

In some examples, the request packet carries a first field, which is to be filled with the request delay.

In some examples, the reply packet carries a second field and a third field; the second field is to be filled with the request delay, and the third field is to be filled with a reply delay; the reply delay includes a residency delay of all network domains that the reply packet passes through on a path.

In some examples, the metadata further includes a third time point, which is a time point when the second node receives the request packet;

the passive response module 143 can be specifically to:

calculate a delay from the third time point to a fourth time point as a processing delay; wherein the fourth time point is a time point when the second node sends the reply packet; a sum value of the processing delay and a residency delay of all network domains that the reply packet passes through on a path is the reply delay;

encapsulate the request delay and the processing delay in the reply packet.

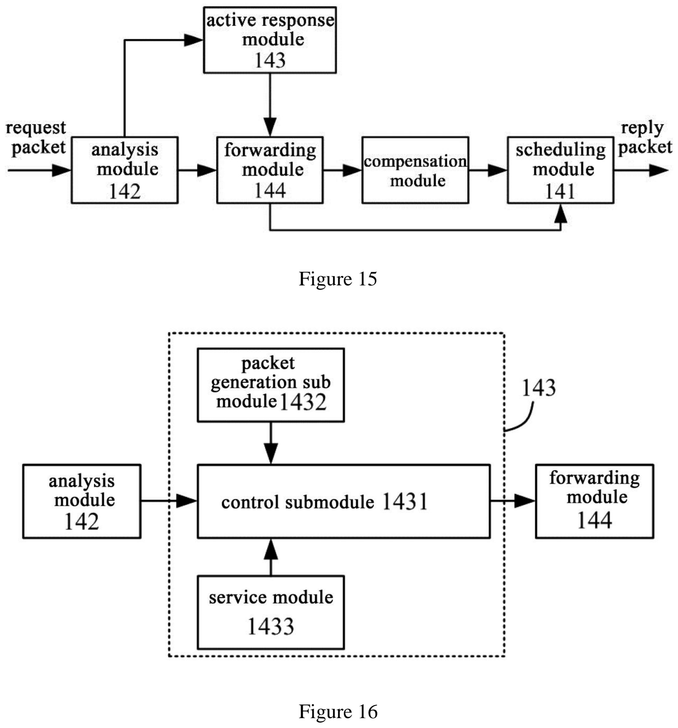

In some examples, as shown in Figure 15, the above device for obtaining a compensation delay upper limit can further include a forwarding module 144. As shown in Figure 16, the passive response module 143 may include a control submodule 1431 and a packet generation submodule 1432;

the packet generation submodule 1432 is to generate an original packet corresponding to the reply packet, and sends the original packet to the control submodule 1431; wherein the original packet carries the request delay;

the control submodule 1432 is to obtain the original packet and send tunnel information of the each path in the target path group and the original packet to the forwarding module 144;

the forwarding module 144 is to process the original packet based on the tunnel information corresponding to each path in the target path group to obtain the reply packet corresponding to each path, and send the reply packet corresponding to each path to the scheduling module 141.

In the example of the disclosure, the second node can further include a compensation module or other modules, as shown in Figure 15, which is not limited.

In some examples, the second node is configured with a first table and a second table associated with the first table; the first table is to record first configuration information of the target path group issued by a controller, and the second table is to record second configuration information of each path included in the target path group issued by the controller.

In the example of the disclosure, the first table and the second table are configured in one module, such as the service module 1433 shown in Figure 16. The first table and the second table are configured in different modules, which are not limited. The first table and the second table can be issued by a controller to the second node, as shown in Figure 13. The controller can issue path related information to the second node, and then the second node stores path related information to the first table and the second table.

In some examples, the first configuration information mentioned above may include but is not limited to: an identifier of the target path group, the number of the paths included in the target path group, an address of the first node, a preset adjustment delay, a reference delay, a period of sending the request packet, a timeout duration of receiving the reply packet, and a first pointer, wherein the first pointer points to a first address of the second table; and/or

The second configuration information mentioned above may include but is not limited to: identifiers of the paths included in the target path group, an identifier of a receiving interface for receiving the reply packet, tunnel identifier for sending the request packet, and the compensation delay upper limit.

In some examples, the analysis module 142 can be further to receive the compensation delay upper limit corresponding to each path sent by the first node, and send the obtained compensation delay upper limit to the passive response module 143;

the passive response module 143 can be further to update a compensation delay upper limit corresponding to each path in the second table with the obtained compensation delay upper limit.

In some examples, the analysis module 142 can be further to receive the reference delay corresponding to the target path group sent by the first node; send the obtained reference delay to the passive response module 143;

the passive response module 143 is further to update a reference delay in the first table with the calculated reference delay.

In some examples, the analysis module 142 can be further to: identify a received packet; if the received packet is identified as the request packet, execute an operation of constructing the metadata corresponding to the request packet; if the received packet is identified as a data packet, determine a third path from the target path group and send the data packet to the scheduling module 141;

the scheduling module 141 can be further to send the data packet to the first node through the third path.

In some examples, the data packet carries a compensation delay upper limit corresponding to the third path.

In the example of the disclosure, the first node and the second node can be exchanged, that is, the second node can be the tail node of the target path group, and the first node can be the head node of the target path group. In order to facilitate deployment and realize deterministic transmission, the first node and the second node can be deployed as the same module structure, as shown in Figure 12 and Figure 13. In this case, when the module structure shown in Figure 12 and Figure 13 is deployed on the second node, the active detection module in Figure 12 becomes a passive response module. In combination with the node structure shown in Figure 12 and Figure 13, the process of obtaining a compensation delay upper limit provided by the example of the disclosure is explained below.

In the first node, the active detection module constructs a request packet to obtain the compensation delay upper limit, sends the request packet to the forwarding module, and the forwarding module bypasses the compensation module and sends the request packet to the scheduling module after processing the request packet such as querying the outgoing interface and re-encapsulating the packet; the scheduling module synthesizes and schedules the request packet and sends it to the second node through a path in the target path group. When the scheduling module sends successfully, it sends the first time point (the time point of sending the request packet) to the active detection module according to the metadata indication of the OAM type of the request packet.

In the second node, the analysis module receives the packet from the first node and other devices, and identifies the packet. If the packet is identified as a request packet from the first node, the analysis module will receive the relevant information of the request packet to form metadata, such as the receiving interface identifier, the time point of receiving the request packet (such as the third time point), the identifier of the target path group, the source IP address of the request packet, the request delay, etc., and send the metadata to the passive response module; the passive response module constructs multiple reply packets according to the metadata of the request packet, and sends these multiple reply packets to the forwarding module; the forwarding module will bypass the compensation module and send the multiple reply packets to the scheduling module after processing such as querying the outgoing interfaces for the multiple reply packets and re-encapsulating the multiple reply packets; after the scheduling module synthetizes and schedules the multiple reply packets, sending them to the first node through multiple paths in the target path group. In addition, if the packet is identified as a data packet sent to the first node, the analysis module will send the data packet to the forwarding module; and the forwarding module bypasses the compensation module and sends the data packet to the scheduling module after processing the data packet such as querying the outgoing interface and re-encapsulating the packet; the scheduling module synthetizes and schedules the data packet and sends it to the first node through multiple paths in the target path group.

In the first node, the analysis module receives a packet from the second node, and identifies the packet. If the packet is identified as a reply packet, the analysis module will receive the relevant information of the reply packet to form metadata, such as the receiving interface identifier, the time point of receiving the reply packet (such as the second time point), the identifier of the target path group, the source IP address of the request packet, the request delay, the reply delay, etc., and send the metadata to the active detection module. The active detection module calculates the reference delay and compensation delay upper limit based on the metadata corresponding to the reply packet. After the active detection module completes the calculation, it updates the compensation delay upper limit for each path in the calculation result to the compensation module to perform delay compensation on deterministic business flows.

In addition, if the packet is identified as a data packet of a deterministic business flow sent from the second node, the analysis module will send the data packet to the forwarding module. The forwarding module processes the data packet, such as query the outgoing interface for the data packet, and re-encapsulates the packet, and sends it to the compensation module. The compensation module performs delay compensation on the data packet based on the compensation delay upper limit for each path. After the delay compensation by the compensation module, the data packet is sent to the scheduling module. After the scheduling module synthesizes and schedules the data packet, the data packet is sent to an receiving end. The precision requirement for deterministic business flow is high. To ensure the high precision of deterministic business flow, the scheduling module schedules the data packet of a deterministic business flow with the highest priority.

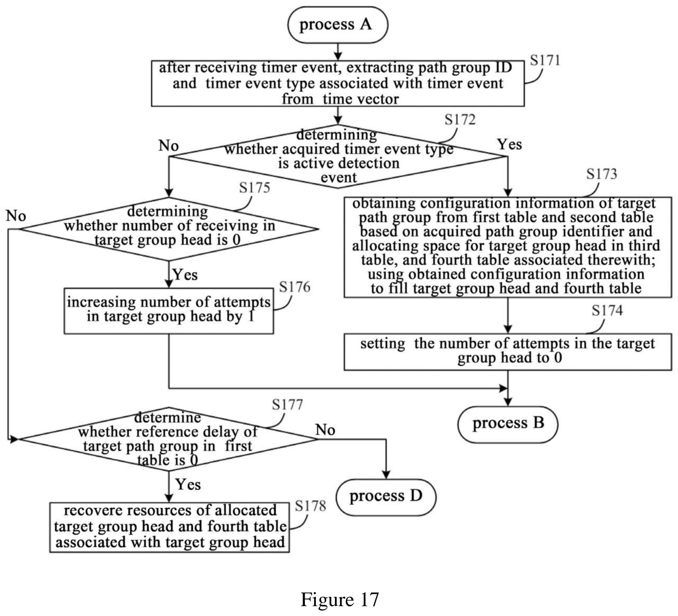

In addition, combined with the flowchart of an active detection module learning a compensation delay upper limit shown in Figures 17 to 20, a detailed explanation is provided for the method of obtaining a compensation delay upper limit provided in the example of the disclosure. The first node is the tail node of the target path group, namely CN, and the second node is the head node of the target path group, namely HN. In the control plane configuration, after the target path group is created, CN will add a timer event to a time vector. The timer event triggers an active detection process. There are two types of timer events: active detection events (the first timer event) and request reply timeout events (the second timer event). In addition, when CN receives a reply packet, it obtains the relevant information of the reply packet, and calculates the reference delay and the compensation delay upper limit based on the relevant information.

In process A shown in Figure 17:

Block S171, after receiving a timer event, the active detection module extracts the path group ID and the timer event type associated with the timer event from the time vector. Timer event types include active detection events and request reply timeout events. The obtained path group ID indicates the target path group.

Block S172, the active detection module determines whether the acquired timer event type is an active detection event. If yes, that is, if the timer event type obtained is an active detection event, then execute block S173; if no, that is, if the timer event type obtained is a request reply timeout event, then execute block S175.

Block S173, the active detection module obtains the configuration information of the target path group from the first table and the second table according to the acquired path group identifier, and allocates a space for a target group head in the third table, and allocates a fourth table associated with the target group head at the same time; using the obtained configuration information to fill the target group head and the fourth table, such as the group ID, path number, preset duration, preset adjustment delay, etc. in the target group head. The sequence number of the request packet is initialized to 0, and the valid bit is 1. In addition, the path ID in the fourth table, etc is filled.

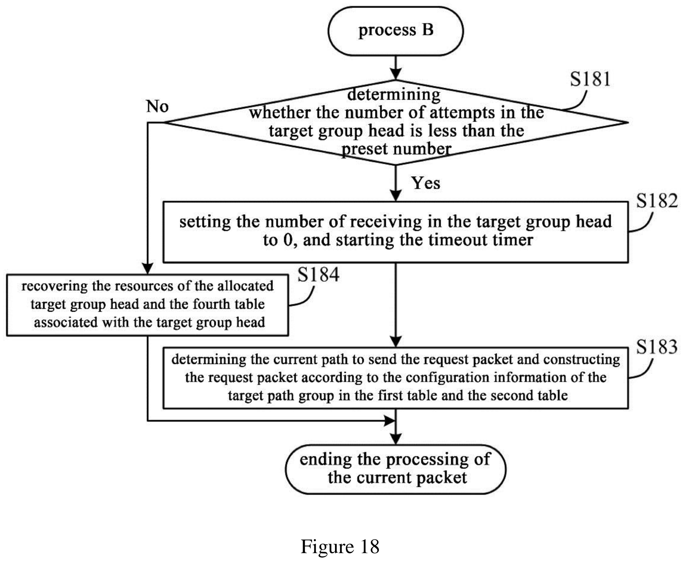

Block S174, the active detection module sets the number of attempts in the target group head to 0, which indicates how many paths are used to attempt to send the request packet. In addition, the active detection module initializes the number of receiving to 0, so as to accurately calculate the compensation delay upper limit. Then, process B shown in Figure 18 is executed.

Block S175, the active detection module determines whether the number of receiving in the target group head is 0. If yes, it indicates that the request packet failed to be sent, and the current path failed, and then execute block S176. If no, execute block S177.

Block S176, the active detection module increases the number of attempts in the target group head by 1, and then executes the process B shown in Figure 18.

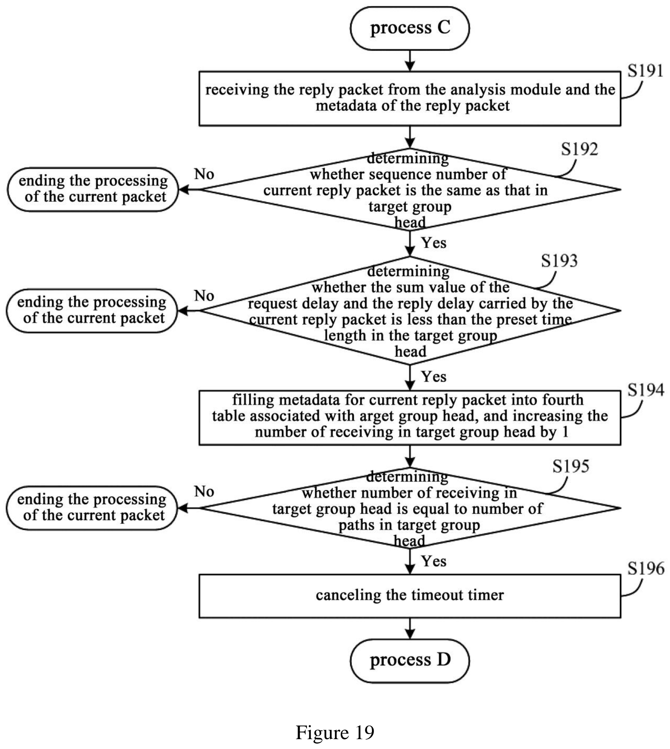

Block S177, the active detection module determines whether the reference delay of the target path group in the first table is 0. If yes, execute block S178. If no, execute process C shown in Figure 19.

In the example of the disclosure, the reference delay of the target path group in the first table is 0, which indicates that the first node has not learned the reference delay of the target path group for the time being. In order to ensure the accuracy of the compensation delay upper limit obtained subsequently, realize the service will not perceive the delay change, and deterministic transmission, the active detection module executes block S178, recovers resources, and ends the obtaining process of the compensation delay upper limit corresponding to the target path group.

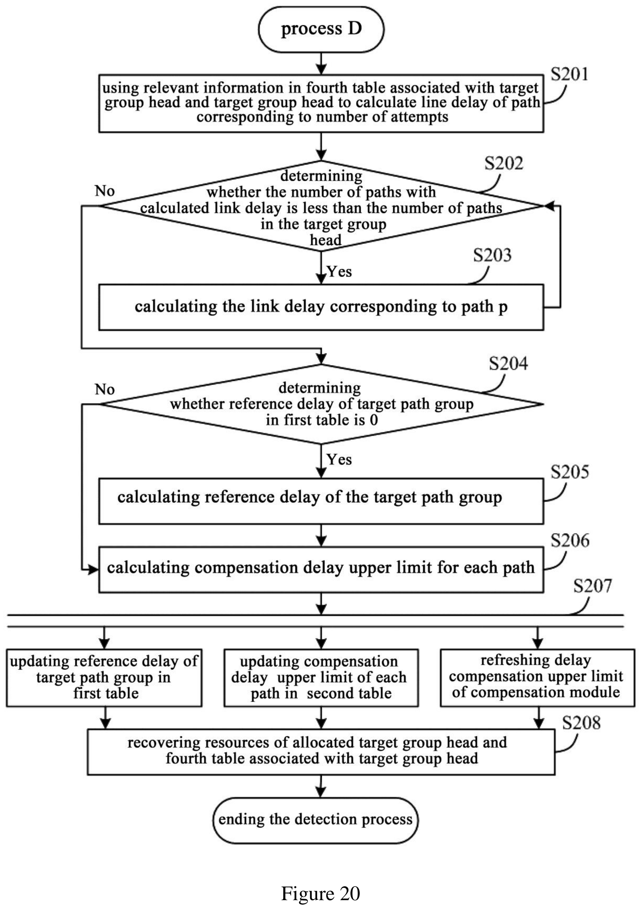

The reference delay of the target path group in the first table is not 0, that is, the reference delay of the target path group in the first table is greater than 0, indicating that the first node has learned the reference delay of the target path group. To adapt to the scenario of partial path failure, the active detection module can continue to execute the process D shown in Figure 20 to obtain the compensation delay upper limit.

Block S178, the active detection module recovers the resources of the allocated target group head and the fourth table associated with the target group head.

In process B shown in Figure 18:

Block S181, the active detection module determines whether the number of attempts in the target group head is less than the preset number. If yes, execute block S182. If no, execute block S184.

Block S182, the active detection module sets the number of receiving in the target group head to 0, and starts a timeout timer.

The number of receiving are used to indicate that the number of paths via which a reply packet has been received. The timeout timer corresponds to the request reply timeout event. The duration of the timeout timer is the preset duration in the target group head,

When the number of receiving in the target group head is equal to the number of paths, it means that all paths have completed receiving the reply packet, which can be one of the conditions for the ending of the detection (compensation delay upper limit acquisition) process. The case that he timeout timer times out can also be one of the conditions for the ending of the detection process.

Block S183, the active detection module determines the current path to send the request packet and constructs the request packet according to the configuration information of the target path group in the first table and the second table. The current path to send the request packet is the path corresponding to the number of attempts in the current target group head. The configuration information based on which the request packet is constructed can include but is not limited to the peer address and tunnel identifier.

The packet generation submodule in the active detection module generates a request packet and sends the request packet to the forwarding module. When the scheduling module successfully sends the request packet, it sends back the first time point of sending the request packet to the active detection module according to the metadata indication of the OAM type of the request packet, and then updates the first time point to the target group head. If sending the request packet fails, a request reply timeout event will be generated, and then return to block S171.

In the example of the disclosure, the timeout timer can also be started when S183 is executed, which is not limited.

Block S184, the active detection module recovers the resources of the allocated target group head and the fourth table associated with the target group head.

In process C shown in Figure 19:

Block S191, the active detection module receives the reply packet from the analysis module and the metadata of the reply packet, such as group identifier, request delay, reply delay, receiving interface identifier, time point of receiving the reply packet, sequence number of the reply packet, etc.

The active detection module can obtain the group ID of the reply packet by querying the ACL (Access Control List). The active detection module can also configure the mapping table of the receiving interface ID and group ID, and the active detection module obtains the group ID of the reply packet by querying the mapping table based on the receiving interface ID.

In the example of the disclosure, the active detection module can execute block S171 and block S191 in parallel. When the number of receiving in the target group head is equal to the number of paths, or the timeout timer times out, perform the detection process corresponding to receiving the current request packet.

Block S192, the active detection module determines whether the sequence number of the current reply packet is the same as that in the target group head. If they are the same, it means that the received reply packet is the reply packet of the current request packet, execute block S193. If they are different, it means that the received reply packet is not the reply packet of the current request packet, finish the processing of the current reply packet. The reply packet can be discarded and it can be continued to execute block S191 to wait for receiving a reply packet.

Block S193, the active detection module determines whether the sum value of the request delay and the reply delay carried in the current reply packet is less than a preset duration in the target group head. If yes, further indicating that the received reply packet is the reply packet for the current request packet, execute block S194. If they are different, it means that the received reply packet is not the reply packet for the current request packet, finish the processing of the current reply packet. The reply packet can be discarded and it can be continued to execute block S191 to wait for receiving a reply packet.

Block S194, the active detection module fills the metadata corresponding to the current reply packet into the fourth table associated with the target group head, and increases the number of receiving in the target group head by 1.

Block S195, the active detection module determines whether the number of receiving in the target group head is equal to the number of paths in the target group head. If yes, execute block S196. If no, end the processing of the current reply packet, continue to execute block S191 to wait for receiving a reply packet.

Block S196, the active detection module cancels the timeout timer, and continues to execute the process D shown in Figure 20 to obtain the compensation delay upper limit.

In process D shown in Figure 20:

Block S201, the active detection module uses the target group head and the relevant information in the fourth table associated with the target group head to calculate the link delay of the path corresponding to the number of attempts.

For example, the active detection module can use formula (4) above to calculate the link delay of the path corresponding to the number of attempts.

Block S202, the active detection module determines whether the number of paths for which the link delay has been calculated is less than the number of paths in the target group head. If yes, execute block S203; If no, execute block S204.

In the example of the disclosure, the active detection module can use the number of attempts as the path identifier for sending the request packet, and set the parameter p to indicate the path identifier for calculating the current link delay. The initial value of p is 0, and p is less than or equal to the number of paths -1, and p is not equal to the number of attempts. The active detection module determines whether p is less than or equal to the number of paths -1. If yes, execute block S203 to set p=p+1. If no, execute block S204.

Block S203, the active detection module uses the above formula (5) to calculate the link delay corresponding to path p, and returns to execute block S202.

Block S204, the active detection module determines whether the reference delay of the target path group in the first table is 0. If yes, execute block S205 to calculate the reference delay of the target path group. If yes, execute block S206.

Block S205, the active detection module uses the above formula (8) to calculate the reference delay of the target path group.

Block S206, the active detection module uses formula (6) above to calculate the compensation delay upper limit for each path.

Block S207, the active detection module updates the reference delay of the target path group in the first table, updates the compensation delay upper limit for each path in the second table, and refreshes the delay compensation upper limit of the compensation module.

Block S208, the active detection module recovers the resources of the allocated target group head and the fourth table associated with the target group head, ends the detection process.

By adopting the technical solution provided in the examples of the disclosure, the delay changes caused by environmental factors can be imperceptible to the business, reducing the jitter in end-to-end services. For example, the jitter between the first node and the second node of the target path group can be reduced, ensuring the deterministic transmission of end-to-end services and improving the reliability of business transmission. In addition, in the technical solution provided by the example of the present disclosure, only time synchronization in the network domain is required to accurately obtain the residency delay in each network domain, and then accurately obtain the compensation delay upper limit, without the time synchronization between domains, which reduces the difficulty of solution implementation, facilitates wide application, and improves the accuracy of delay compensation.

Corresponding to the method for obtaining a compensation delay upper limit mentioned above, the example of the present disclosure also provides a forwarding node that executes any method for obtaining a compensation delay upper limit applied to the first node, or the method for obtaining a compensation delay upper limit applied to the second node.

In the above example, it can be realized in whole or in part by software, hardware, firm ware or any combination thereof. When implemented by software, it can be realized in the form of computer program products in whole or in part. The computer program product comprises one or more computer instructions. When the computer program instruction is loaded and executed on the computer, the flow or function described in the example of the present disclosure is generated in whole or in part. The computer can be a general purpose computer, a special purpose computer, a computer network, or other programmable devices. The computer instruction can be stored in a computer-readable storage medium, or transferred from one computer-readable storage medium to another computer-readable storage medium. For example, the computer instruction can be transferred from a website, a computer The server or data center transmits to another website site, computer, server or data center through wired (such as coaxial cable, optical fiber, digital subscriber line (DSL)) or wireless (such as infrared, wireless, microwave, etc.). The computer-readable storage medium can be any available medium that can be accessed by a computer or a data storage device comprising a server, a data center and the like integrated with one or more available media. The available media can be magnetic media (for example, floppy disk, hard disk, magnetic tape), optical media (for example, DVD), or semiconductor media (for example, solid state disk (SSD)).

It should be noted that in this article, relational terms such as first and second are only to distinguish one entity or operation from another entity or operation, and do not necessarily require or imply any actual relationship or order between these entities or operations. Moreover, the terms "comprise", "contain", or any other variation thereof are intended to encompass non-exclusive inclusion, such that a process, method, item, or device that comprises a series of elements not only comprises those elements, but also other elements that are not explicitly listed, or also comprise elements inherent in such a process, method, item, or device. Without further limitations, the elements limited by the statement "comprising one..." do not exclude the existence of other identical elements in the process, method, item, or device that comprises the elements.

Each example of the present description is described in a relevant manner, and the same and similar parts of each example can be referred to each other, and each example highlights the differences from other example. In particular, for the examples of devices and forwarding node, since they are basically similar to the examples of methods, the description is relatively simple. Please refer to the partial description of the examples of methods for details.

The above are only preferred examples of the disclosure and are not intended to limit the disclosure. Any modifications, equivalent substitutions, improvements, etc. made within the spirit and principles of the disclosure should be comprised within the claimed scope of the disclosure.

The above are only preferred examples of the present disclosure and are not intended to limit the present disclosure. Any modifications, equivalent substitutions, improvements, etc. made within the spirit and principles of the present disclosure should be included within the claimed scope of the present disclosure.

## Claims

1. A method for obtaining a compensation delay upper limit, wherein the method is applied to a first node connected to a second node through a target path group including multiple paths, and the method comprises:

   sending a request packet to the second node through a first path in the target path group, and obtaining a first time point when the first node sends the request packet;
   receiving a reply packet sent by the second node through each path in the target path group, and constructing metadata corresponding to each reply packet; wherein the metadata corresponding to each reply packet includes a second time point when the first node receives the reply packet, a request delay and a reply delay carried in the reply packet; the request delay is a residency delay of all network domains that the request packet passes through on the first path, and the reply delay corresponding to each path includes a residency delay of all network domains that the reply packet passes through on the path;
   determining a link delay corresponding to each path according to the first time point, the request delay, the second time point corresponding to each path, and the reply delay corresponding to each path;
   calculating a difference between a reference delay corresponding to the target path group and the link delay corresponding to each path to obtain the compensation delay upper limit corresponding to each path.

2. The method according to claim 1, wherein determining the link delay corresponding to each path according to the first time point, the request delay, the second time point corresponding to each path, and the reply delay corresponding to each path, comprises:

   determining a first link delay corresponding to the first path according to the first time point, the request delay, a second time point corresponding to the first path, and a reply delay corresponding to the first path;
   determining a second link delay corresponding to a further path according to the first time point, the request delay, a second time point corresponding to the further path, a reply delay corresponding to the further path, and the first link delay, wherein the further path is a path other than the first path in the target path group.

3. The method according to claim 1, wherein the reference delay is determined by:

   determining a second path from the target path group;
   calculating a sum value of a reply delay corresponding to the second path, a link delay corresponding to the second path and a preset adjustment delay, to obtain the reference delay corresponding to the target path group.

4. The method according to claim 3, wherein the second path is a path in the target path group, via which the reply packet is received at the latest.

5. The method according to any one of claims 1-4, wherein the request packet carries a first field, which is to be filled with the request delay.

6. The method according to any one of claims 1-4, wherein the reply packet carries a second field and a third field, the second field is to be filled with the request delay, and the third field is to be filled with the reply delay.

7. The method according to any one of claims 1-4, wherein the reply delay corresponding to each path is a sum value of a processing delay and the residency delay of all network domains that the reply packet passes through on the path; the processing delay is a delay from a third time point to a fourth time point; the third time point is a time point when the second node receives the request packet, and the fourth time point is a time point when the second node sends the reply packet.

8. The method according to claim 1, wherein the method further comprises:

   generating an original packet according to a preset period;
   determining one path from the target path group as the first path;
   processing the original packet based on tunnel information of the first path to obtain the request packet.

9. The method according to claim 8, wherein a first timer event is registered in the first node, and a duration for a first timer corresponding to the first timer event is the preset period;
   the method further comprises:
   after the first timer times out, generating the original packet based on the first timer event and resetting the first timer.

10. The method according to claim 8, wherein the method further comprises:

   after sending the request packet, determining whether a duration from a current time point to the first time point reaches a preset duration to obtain a determining result;
   in response to determining that the determining result indicates that the preset duration has not been reached and a first number of reply packets have been received, executing an operation of determining the link delay corresponding to each path according to the first time point, the request delay, the second time point corresponding to each path, and the reply delay corresponding to each path, wherein the first number is the number of paths included in the target path group;
   in response to determining that the determining result indicates that the preset duration has been reached and no reply packet has been received, re-executing an operation of determining one path from the target path group as the first path, until the number of times of re-executions reaches a preset number of times;
   in response to determining that the determining result indicates that the preset duration has been reached and at least one reply packet has been received, determining a link delay corresponding to a path transmitting each received reply packet based on the first time point, the request delay, a second time point corresponding to the path transmitting each received reply packet, and a reply delay corresponding to the path transmitting each received reply packet.

11. The method according to claim 10, wherein before executing the operation of determining the link delay corresponding to the path transmitting each received reply packet based on the first time point, the request delay, the second time point corresponding to the path transmitting each received reply packet, and the reply delay corresponding to the path transmitting each received reply packet, the method further comprises:

   determining whether the first node has configured the reference delay;
   in response to determining that the first node has configured the reference delay, executing the operation of determining the link delay corresponding to the path transmitting each received reply packet based on the first time point, the request delay, the second time point corresponding to the path transmitting each received reply packet, and the reply delay corresponding to the path transmitting each received reply packet.

12. The method according to claim 10 or 11, wherein the method further comprises:

   after sending the request packet, registering a second timer event in the first node and starting a second timer corresponding to the second timer event; wherein a duration for the second timer is the preset duration;
   determining whether the duration from the current time point to the first time point reaches the preset duration to obtain the determining result, comprises:

      determining whether the second timer has timed out;
      in response to determining that the second timer has not timed out, obtaining a first determining result, which indicates that the duration from the current time point to the first time point does not reach the preset duration;
in response to determining that the second timer has timed out, obtaining a second determining result, which indicates that the duration from the current time point to the first time point reaches the preset duration.

13. The method according to claim 1, wherein the metadata corresponding to each reply packet further includes a sequence number of the reply packet; the method further comprises:
executing the operation of determining the link delay corresponding to each path according to the first time point, the request delay, the second time point corresponding to each path and the reply delay corresponding to each path in response to determining that the sequence number of the reply packet is the same as a sequence number of the request packet, and a sum value of the request delay and a reply delay corresponding to a path transmitting the reply packet is less than the preset duration.

14. The method according to claim 1, wherein the metadata corresponding to each reply packet further includes a sequence number of the reply packet; the method further comprises:
discarding a reply packet in response to determining that the sequence number of the reply packet is different from a sequence number of the request packet, and/or a sum value of a reply delay corresponding to the path transmitting the reply packet and the request delay is greater than or equal to a preset duration.

15. The method according to claim 1, wherein the first node is configured with a first table and a second table associated with the first table; the first table is to record first configuration information of the target path group issued by a controller, and the second table is to record second configuration information of each path included in the target path group issued by the controller.

16. The method according to claim 15, wherein the first configuration information includes: an identifier of the target path group, the number of the paths included in the target path group, an address of the second node, a preset adjustment delay, the reference delay, a period of sending the request packet, a timeout duration of receiving the reply packet, and a first pointer, wherein the first pointer points to a first address of the second table; and/or

the second configuration information includes: identifiers of the paths included in the target path group, an identifier of a receiving interface for receiving the reply packet, tunnel identifier for sending the request packet, and the compensation delay upper limit;
the method further comprises:
after obtaining the compensation delay upper limit corresponding to each path, updating a compensation delay upper limit corresponding to each path in the second table with the obtained compensation delay upper limit.

17. The method according to claim 16, wherein the method further comprises:
in response to determining that the reference delay is calculated, updating a reference delay in the first table with the calculated reference delay.

18. The method according to claim 1, wherein the first node is configured with a third table and a fourth table associated with the third table; the third table is to record third configuration information of the target path group, and the fourth table is to record fourth configuration information, for obtaining the compensation delay upper limit, corresponding to each path included in the target path group;
the method further comprises:

before sending the request packet to the second node, obtaining the third configuration information of the target path group and filling the third configuration information into the third table;
after obtaining the metadata, filling fourth configuration information corresponding to the metadata into the fourth table.

19. The method according to claim 18, wherein the method further comprises:
after obtaining the compensation delay upper limit, recovering the third and fourth tables corresponding to the target path group.

20. The method according to claim 18 or 19, wherein the third configuration information includes: an identifier of the target path group, the number of the paths included in the target path group, a timeout duration of receiving the reply packet, the number of paths trying to send the request packet, the number of paths receiving the reply packet, a preset adjustment delay, a sequence number of the request packet, the first time point, and a second pointer; the second pointer points to a first address of the fourth table; and/or

the fourth configuration information includes: identifiers of the paths included in the target path group, the request delay, the reply delay and the second time point.

21. The method according to claim 1, wherein the method further comprises;

identifying a received packet;

in response to determining that the received packet is identified as the reply packet corresponding to the request packet, executing an operation of constructing the metadata corresponding to each reply packet;

in response to determining that the received packet is identified as a data packet, performing delay compensation on the data packet according to a compensation delay upper limit corresponding to a third path, which is a path transmitting the data packet.

22. The method according to claim 21, wherein the compensation delay upper limit corresponding to the third path is the compensation delay upper limit stored in the first node; or

the compensation delay upper limit corresponding to the third path is the compensation delay upper limit carried in the data packet.

23. The method according to claim 1, wherein the method further comprises:

sending the obtained reference delay and/or the compensation delay upper limit corresponding to each path to the second node.

24. A method for obtaining a compensation delay upper limit, wherein the method is applied to a second node connected to a first node through a target path group including multiple paths, and the method comprises:

receiving a request packet sent by the first node through a first path in the target path group, and constructing metadata corresponding to the request packet; wherein the metadata includes a request delay carried in the request packet; the request delay is a residency delay of all network domains that the request packet passes through on the first path;

encapsulating the request delay in a reply packet;

sending the reply packet to the first node through each path in the target path group.

25. The method according to claim 24, wherein the request packet carries a first field, which is to be filled with the request delay.

26. The method according to claim 24, wherein the reply packet carries a second field and a third field; the second field is to be filled with the request delay, and the third field is to be filled with a reply delay; the reply delay includes a residency delay of all network domains that the reply packet passes through on a path.

27. The method according to claim 24, wherein the metadata further includes a third time point, which is a time point when the second node receives the request packet;

wherein, encapsulating the request delay in the reply packet, comprises:

calculating a delay from the third time point to a fourth time point as a processing delay; wherein the fourth time point is a time point when the second node sends the reply packet; a sum value of the processing delay and a residency delay of all network domains that the reply packet passes through on a path is the reply delay;

encapsulating the request delay and the processing delay in the reply packet.

28. The method according to claim 24, wherein encapsulating the request delay in the reply packet, comprises:

generating an original packet corresponding to the request packet, wherein the original packet carries the request delay;

processing the original packet based on tunnel information of each path in the target path group, to obtain the reply packet corresponding to each path.

29. The method according to claim 24, wherein the second node is configured with a first table and a second table associated with the first table; the first table is to record first configuration information of the target path group issued by a controller, and the second table is to record second configuration information of each path included in the target path group issued by the controller.

30. The method according to claim 29, wherein the first configuration information includes: an identifier of the target path group, the number of the paths included in the target path group, an address of the first node, a preset adjustment delay, a reference delay, a period of sending the request packet, a timeout duration of receiving the reply packet, and a first pointer, wherein the first pointer points to a first address of the second table; and/or
the second configuration information includes: identifiers of the paths included in the target path group, an identifier of a receiving interface for receiving the reply packet, tunnel identifier for sending the request packet, and the compensation delay upper limit.

31. The method according to claim 29, wherein the method further comprises:

receiving the compensation delay upper limit corresponding to each path sent by the first node;
updating a compensation delay upper limit corresponding to each path in the second table with the obtained compensation delay upper limit.

32. The method according to claim 29, wherein the method further comprises:

receiving the reference delay corresponding to the target path group sent by the first node;
updating a reference delay in the first table with the calculated reference delay.

33. The method according to claim 24, wherein the method further comprises:

identifying a received packet;
in response to determining that the received packet is identified as the request packet, executing an operation of constructing the metadata corresponding to the request packet;
in response to determining that the received packet is identified as a data packet, determining a third path from the target path group, and sending the data packet to the first node through the third path.

34. The method according to claim 33, wherein the data packet carries a compensation delay upper limit corresponding to the third path.

35. A device for obtaining a compensation delay upper limit, wherein the device is applied to a first node connected to a second node through a target path group including multiple paths, and the device comprises a scheduling module, an analysis module and an active detection module;

the scheduling module is to send a request packet to the second node through a first path in the target path group, and obtain a first time point when the first node sends the request packet; and submit the first time point to the active detection module;
the analysis module is to receive a reply packet sent by the second node through each path in the target path group; each reply packet includes a request delay and a reply delay; the request delay is a residency delay of all network domains that the request packet passes through on the first path, and the reply delay corresponding to each path includes a residency delay of all network domains that the reply packet passes through on the path; construct metadata corresponding to each reply packet, and submit the metadata corresponding to each reply packet to the active detection module; the metadata corresponding to each reply packet includes a second time point when the first node receives the reply packet, the request delay and the reply delay carried in the reply packet;
the active detection module is to determine a link delay corresponding to each path according to the first time point, the request delay, the second time point corresponding to each path, and the reply delay corresponding to each path; calculate a difference between a reference delay corresponding to the target path group and the link delay corresponding to each path to obtain the compensation delay upper limit corresponding to each path.

36. The device according to claim 35, wherein the active detection module is specifically to:

determine a first link delay corresponding to the first path according to the first time point, the request delay, a second time point corresponding to the first path, and a reply delay corresponding to the first path;
determine a second link delay corresponding to a further path according to the first time point, the request delay, a second time point corresponding to the further path, a reply delay corresponding to the further path, and the first link delay, wherein the further path is a path other than the first path in the target path group.

37. The device according to claim 35, wherein the active detection module is further to:

determine a second path from the target path group;
calculate a sum value of a reply delay corresponding to the second path, a link delay corresponding to the second path and a preset adjustment delay, to obtain the reference delay corresponding to the target path group.

38. The device according to claim 37, wherein the second path is a path in the target path group, via which the reply packet is received at the latest.

39. The device according to any one of claims 35-38, wherein the request packet carries a first field, which is to be filled with the request delay.

40. The device according to any one of claims 35-38, wherein the reply packet carries a second field and a third field, the second field is to be filled with the request delay, and the third field is to be filled with the reply delay.

41. The device according to any one of claims 35-38, wherein the reply delay corresponding to each path is a sum value of a processing delay and the residency delay of all network domains that the reply packet passes through on the path; the processing delay is a delay from a third time point to a fourth time point; the third time point is a time point when the second node receives the request packet, and the fourth time point is a time point when the second node sends the reply packet.

42. The device according to claim 35, wherein the device further comprises a forwarding module; the active detection module comprises a control submodule and a packet generation submodule;

the packet generation submodule is to generate an original packet according to a preset period and send the original packet to the control submodule;
the control submodule is to obtain the original packet and determine one path from the target path group as the first path to send the tunnel information of the first path and the original packet to the forwarding module;
the forwarding module is to process the original packet based on the tunnel information of the first path to obtain the request packet, and send the request packet to the scheduling module.

43. The device according to claim 42, wherein the active detection module further comprises a time vector; a first timer event is registered in the time vector, and a duration for a first timer is the preset period;

the control submodule is further to obtain the first timer event from the time vector after the first timer times out, send the first timer event to the packet generation submodule, and reset the first timer;
the packet generation submodule is specifically to generate the original packet based on the first timer event after obtaining the first timer event.

44. The device according to claim 42, wherein the control submodule is further to:

after sending the request packet, determine whether a duration from a current time point to the first time point reaches a preset duration to obtain a determining result;
in response to determining that the determining result indicates that the preset duration has not been reached and a first number of reply packets have been received, execute an operation of determining the link delay corresponding to each path according to the first time point, the request delay, the second time point corresponding to each path, and the reply delay corresponding to each path, wherein the first number is the number of paths included in the target path group;
in response to determining that the determining result indicates that the preset duration has been reached and no reply packet has been received, re-execute an operation of determining one path from the target path group as the first path, until the number of times of re-executions reaches a preset number of times;
in response to determining that the determining result indicates that the preset duration has been reached and at least one reply packet has been received, determine a link delay corresponding to a path transmitting each received reply packet based on the first time point, the request delay, a second time point corresponding to the path transmitting each received reply packet, and a reply delay corresponding to the path transmitting each received reply packet.

**45.** The device according to claim 44, wherein the control submodule is specifically to:
determine whether the first node has configured the reference delay; in response to determining that the determining result indicates that the preset duration has been reached, at least one reply packet has been received, and it is determined that the first node has configured the reference delay, determine the link delay corresponding to the path transmitting each received reply packet based on the first time point, the request delay, the second time point corresponding to the path transmitting each received reply packet, and the reply delay corresponding to the path transmitting each received reply packet.

**46.** The device according to claim 44 or 45, wherein the active detection module further comprises a time vector; the control submodule is further to:

after sending the request packet, register a second timer event in the first node and starting a second timer corresponding to the second timer event; wherein a duration for the second timer is the preset duration;
determine whether the second timer has timed out;
in response to determining that the second timer has not timed out, obtain a first determining result, which indicates that the duration from the current time point to the first time point does not reach the preset duration;
in response to determining that the second timer has timed out, obtain a second determining result, which indicates that the duration from the current time point to the first time point reaches the preset duration.

**47.** The device according to claim 35, wherein the metadata corresponding to each reply packet further includes a sequence number of the reply packet;
the active detection module is further to determine the link delay corresponding to each path according to the first time point, the request delay, the second time point corresponding to each path and the reply delay corresponding to each path in response to determining that the sequence number of the reply packet is the same as a sequence number of the request packet, and a sum value of the request delay and a reply delay corresponding to a path transmitting the reply packet is less than the preset duration.

**48.** The device according to claim 35, wherein the metadata corresponding to each reply packet further includes a sequence number of the reply packet;
the active detection module is further to discard a reply packet in response to determining that the sequence number of the reply packet is different from a sequence number of the request packet, and/or a sum value of a reply delay corresponding to the path transmitting the reply packet and the request delay is greater than or equal to a preset duration.

**49.** The device according to claim 35, wherein the active detection module is configured with a first table and a second table associated with the first table; the first table is to record first configuration information of the target path group issued by a controller, and the second table is to record second configuration information of each path included in the target path group issued by the controller.

**50.** The device according to claim 49, wherein the first configuration information includes: an identifier of the target path group, the number of the paths included in the target path group, an address of the second node, a preset adjustment delay, the reference delay, a period of sending the request packet, a timeout duration of receiving the reply packet, and a first pointer, wherein the first pointer points to a first address of the second table; and/or

the second configuration information includes: identifiers of the paths included in the target path group, an identifier of a receiving interface for receiving the reply packet, tunnel identifier for sending the request packet, and the compensation delay upper limit;
the active detection module is further to: after obtaining the compensation delay upper limit corresponding to each path, update a compensation delay upper limit corresponding to each path in the second table with the obtained compensation delay upper limit.

**51.** The device according to claim 50, wherein the active detection module is further to: in response to determining that the reference delay is calculated, update a reference delay in the first table with the calculated reference delay.

**52.** The device according to claim 35, wherein the first node is configured with a third table and a fourth table associated with the third table; the third table is to record third configuration information of the target path group, and the fourth table is to record fourth configuration information, for obtaining the compensation delay upper limit, corresponding to each path included in the target path group;

the active detection module is further to: before the scheduling module sends the request packet to the second node, obtain the third configuration information of the target path group and filling the third configuration information into the third table; after obtaining the metadata, fill fourth configuration information corresponding to the metadata into the fourth table.

53. The device according to claim 52, wherein the active detection module is further to:
after obtaining the compensation delay upper limit, recover the third and fourth tables corresponding to the target path group.

54. The device according to claim 52 or 53, wherein the third configuration information includes: an identifier of the target path group, the number of the paths included in the target path group, a timeout duration of receiving the reply packet, the number of paths trying to send the request packet, the number of paths receiving the reply packet, a preset adjustment delay, a sequence number of the request packet, the first time point, and a second pointer; the second pointer points to a first address of the fourth table; and/or
the fourth configuration information includes: identifiers of the paths included in the target path group, the request delay, the reply delay and the second time point.

55. The device according to claim 35, wherein the device further comprises a compensation module;

the analysis module is further to: identify a received packet; in response to determining that the received packet is identified as the reply packet corresponding to the request packet, construct the metadata corresponding to each reply packet, and submit the metadata corresponding to each reply packet to the active detection module; in response to determining that the received packet is identified as a data packet, send the data packet to the compensation module;
the compensation module is to perform delay compensation on the data packet according to a compensation delay upper limit corresponding to a third path, which is a path transmitting the data packet.

56. The device according to claim 55, wherein the compensation delay upper limit corresponding to the third path is the compensation delay upper limit issued by the active detection module to the compensation module after obtaining the compensation delay upper limit corresponding to each path; or
the compensation delay upper limit corresponding to the third path is the compensation delay upper limit carried in the data packet.

57. The device according to claim 35, wherein the active detection module is further to send the obtained reference delay and/or the compensation delay upper limit corresponding to each path to the scheduling module;
the scheduling module is further to send the obtained reference delay and/or the compensation delay upper limit corresponding to each path to the second node.

58. A device for obtaining a compensation delay upper limit, wherein the device is applied to a second node connected to a first node through a target path group including multiple paths, and the device comprises a scheduling module, an analysis module and a passive response module;

the analysis module is to receive a request packet sent by the first node through a first path in the target path group, and obtain metadata of the request packet; wherein the metadata includes a request delay carried in the request packet; the request delay is a residency delay of all network domains that the request packet passes through on the first path; and submit the metadata to the passive response module;
the passive response module is to encapsulate the request delay in a reply packet; and send the reply packet to the scheduling module;
the scheduling module is to send the reply packet to the first node through each path in the target path group.

59. The device according to claim 58, wherein the request packet carries a first field, which is to be filled with the request delay.

60. The device according to claim 58, wherein the reply packet carries a second field and a third field; the second field is to be filled with the request delay, and the third field is to be filled with a reply delay; the reply delay includes a residency delay of all network domains that the reply packet passes through on a path.

61. The device according to claim 58, wherein the metadata further includes a third time point, which is a time point when the second node receives the request packet;
the passive response module is specifically to:

calculate a delay from the third time point to a fourth time point as a processing delay; wherein the fourth time point is a time point when the second node sends the reply packet; a sum value of the processing delay and a residency delay of all network domains that the reply packet passes through on a path is the reply delay;
encapsulate the request delay and the processing delay in the reply packet.

62. The device according to claim 58, wherein the device further comprises a forwarding module; the passive response module comprises a control submodule and a packet generation submodule;

the packet generation submodule is to generate an original packet corresponding to the reply packet, and sends the original packet to the control submodule; wherein the original packet carries the request delay;
the control submodule is to obtain the original packet and send tunnel information of the each path in the target path group and the original packet to the forwarding module;
the forwarding module is to process the original packet based on the tunnel information corresponding to each path in the target path group to obtain the reply packet corresponding to each path, and send the reply packet corresponding to each path to the scheduling module.

63. The device according to claim 58, wherein the second node is configured with a first table and a second table associated with the first table; the first table is to record first configuration information of the target path group issued by a controller, and the second table is to record second configuration information of each path included in the target path group issued by the controller.

64. The device according to claim 63, wherein the first configuration information includes: an identifier of the target path group, the number of the paths included in the target path group, an address of the first node, a preset adjustment delay, a reference delay, a period of sending the request packet, a timeout duration of receiving the reply packet, and a first pointer, wherein the first pointer points to a first address of the second table; and/or
the second configuration information includes: identifiers of the paths included in the target path group, an identifier of a receiving interface for receiving the reply packet, tunnel identifier for sending the request packet, and the compensation delay upper limit.

65. The device according to claim 63, wherein the analysis module is further to receive the compensation delay upper limit corresponding to each path sent by the first node, and send the obtained compensation delay upper limit to the passive response module;
the passive response module is further to update a compensation delay upper limit corresponding to each path in the second table with the obtained compensation delay upper limit.

66. The device according to claim 63, wherein the analysis module is further to receive the reference delay corresponding to the target path group sent by the first node; send the obtained reference delay to the passive response module;
the passive response module is further to update a reference delay in the first table with the calculated reference delay.

67. The device according to claim 58, wherein the analysis module is further to: identify a received packet; in response to determining that the received packet is identified as the request packet, execute an operation of constructing the metadata corresponding to the request packet; in response to determining that the received packet is identified as a data packet, determine a third path from the target path group and send the data packet to the scheduling module;
the scheduling module is further to send the data packet to the first node through the third path.

68. The device according to claim 67, wherein the data packet carries a compensation delay upper limit corresponding to the third path.

69. A forwarding node, for executing the method according to any one of claims 1-23, or executing the method according to any one of claims 24-34.

Figure 1

| S21 |
| --- |
| sending a request packet to a second node through a first path in a target path group, and obtaining a first time point when the first node sends the request packet |

| S22 |
| --- |
| receiving a reply packet sent by the second node through each path in the target path group, and constructing the metadata corresponding to each reply packet; the metadata corresponding to each reply packet includes a second time point when the first node receives the reply packet, a request delay and a reply delay carried in the reply packet; the request delay is the residency delay of all network domains that the request packet passes through on the first path, and the reply delay corresponding to each path includes the residency delay of all network domains that the reply packet passes through on the path |

| S23 |
| --- |
| determining the link delay corresponding to each path according to the first time point, the request delay, the second time point corresponding to each path, and the reply delay corresponding to each path |

| S24 |
| --- |
| calculating the difference between the reference delay corresponding to the target path group and the line delay corresponding to each path to obtain the compensation delay upper limit corresponding to each path |

Figure 2

Figure 3

Figure 4

Figure 5

generating tan original packet according to a preset period — S61

until the number of reexecutions reaches a preset number

determining one path from the target path group as the first path — S62

processing the original packet based on the tunnel information of the first path to obtain the request packet — S63

sending the request packet to the second node through the first path in the target path group, and obtaining the first time point of sending the request packet — S64

receiving a reply packet sent by the second node through each path in the target path group, and constructing the metadata corresponding to each reply packet; the metadata corresponding to each reply packet includes a second time point when the first node receives the reply packet, the request delay and reply delay carried by the reply packet; the request delay is the residency delay of all network domains that the request packet passes through on the first path, and the reply delay corresponding to each path includes the residency delay of all network domains that the replypacket passes through on the path — S65

determining if the duration from the current time point to the first time point reaches the preset duration — S66

No → determining whether the number of received reply packets reaches the first number — S67

Yes → determining whether the first node has received the reply packet — S68

determining the link delay corresponding to each path according to the first time point, the request delay, the second time point corresponding to each path, and the reply delay corresponding to each path — S69

calculating the difference between the reference delay corresponding to the target path group and the link delay corresponding to each path to obtain the compensation delay upper limit corresponding to each path — S610

Figure 6

the first table

| group ID | number of paths | peer address | preset adjustment delay | reference delay | preset period | preset duration | the first pointer |
|---|---|---|---|---|---|---|---|
| 1 | 4 | 20.20.20.20 | 2 | 40 | 1 | 200 | 0xffe00080 |
| 2 | 2 | ... | ... | x | ... | x | x |
| 3 | 2 | ... | ... | x | ... | x | x |
| ... | ... | ... | ... | ... | ... | ... | ... |

the second table

| path ID | receiving interface ID | tunnel ID | compensation delay upper limit |
|---|---|---|---|
| 1 | 0 | 1 | x |
| 2 | 1 | 5 | x |
| 3 | 2 | 8 | x |
| 4 | 3 | 10 | x |

Figure 7

the third table

| valid bit | the number of paths | preset duration | the number of attempts | the number of receiving | preset adjustment delay | sequence number | the first time point | the second pointer |
|---|---|---|---|---|---|---|---|---|

index (group ID)

| | |
|---|---|
| 0 | group head 1 |
| 1 | group head 2 |
| ... | ... |
| 9 | group head 9 |

the fourth table

| path ID | request delay | reply delay | the second time point |
|---|---|---|---|
| 1 | x | x | x |
| 2 | x | x | x |
| 3 | x | x | x |
| 4 | x | x | x |

Figure 8

receiving a request packet sent by a first node through the first path in the target path group, and constructing the metadata corresponding to the request packet; the metadata includes a request delay carried in the request packet; the request delay is the residency delay of all network domains that the request packet passes through on the first path — S91

encapsulating the request delay in a reply packet — S92

sending the reply packet to the first node through each path in the target path group — S93

Figure 9

reply packet → analysis module 102 → active detection module 103 → scheduling module 101 → request packet

Figure 10

active detection module 103

reply packet → analysis module 102 → forwarding module 104 → compensation module 105 → scheduling module 101 → request packet

Figure 11

Figure 12

Figure 13

Figure 14

Figure 15

Figure 16

Figure 17

process B

determining whether the number of attempts in the target group head is less than the preset number  S181

No

Yes

setting the number of receiving in the target group head to 0, and starting the timeout timer  S182

recovering the resources of the allocated target group head and the fourth table associated with the target group head  S184

determining the current path to send the request packet and constructing the request packet according to the configuration information of the target path group in the first table and the second table  S183

ending the processing of the current packet

Figure 18

```
                          ╭──────────────╮
                          │  process C   │
                          ╰──────┬───────╯
                                 │
                                 ▼
  ┌────────────────────────────────────────────────────────┐   S191
  │ receiving the reply packet from the analysis module and │
  │         the metadata of the reply packet                │
  └────────────────────────┬───────────────────────────────┘
                           │
                           ▼
                      determining                              S192
       No      whether sequence number of
  ◄─────────  current reply packet is the same as that in
              target group
  ending the processing       head
   of the current packet
                          │ Yes
                          ▼
                      determining                              S193
                 whether the sum value of the
       No      request delay and the reply delay carried by the
  ◄─────────  current reply packet is less than the preset time
              length in the target group
  ending the processing        head
   of the current packet
                          │ Yes
                          ▼
  ┌────────────────────────────────────────────────────────┐   S194
  │ filling metadata for current reply packet into fourth   │
  │ table associated with arget group head, and increasing  │
  │ the number of receiving in target group head by 1       │
  └────────────────────────┬───────────────────────────────┘
                           │
                           ▼
                      determining                              S195
       No     whether number of receiving in
  ◄─────────  target group head is equal to number of
              paths in target group
  ending the processing      head
   of the current packet
                          │ Yes
                          ▼
  ┌────────────────────────────────────────────────────────┐   S196
  │              canceling the timeout timer                │
  └────────────────────────┬───────────────────────────────┘
                           │
                           ▼
                  ╭──────────────╮
                  │  process D   │
                  ╰──────────────╯
```

Figure 19

Figure 20

## INTERNATIONAL SEARCH REPORT

| International application No. |
|---|
| **PCT/CN2023/132127** |

| A. | CLASSIFICATION OF SUBJECT MATTER |
|---|---|

H04L45/121(2022.01)i

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, CJFD, ENTXTC, ENTXT, DWPI, 3GPP: 时延, 延时, 延迟, 补偿, 应答, 请求, 上限, 驻留, delay+, compensat+, ack, req, upper limit, resid+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114697240 A (HUAWEI TECHNOLOGIES CO., LTD.) 01 July 2022 (2022-07-01) description, paragraphs 0201-0323 | 1-69 |
| A | CN 116647484 A (ZTE CORP.) 25 August 2023 (2023-08-25) entire document | 1-69 |
| A | WO 2022083574 A1 (VIVO MOBILE COMMUNICATION CO., LTD.) 28 April 2022 (2022-04-28) entire document | 1-69 |
| A | WO 2023184926 A1 (ZTE CORP.) 05 October 2023 (2023-10-05) entire document | 1-69 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 June 2024** | **24 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/132127**

| Patent document cited in search report | | | Publication date (day/month/year) | Patent family member(s) | Publication date (day/month/year) |
|---|---|---|---|---|---|
| CN | 114697240 | A | 01 July 2022 | None | |
| CN | 116647484 | A | 25 August 2023 | None | |
| WO | 2022083574 | A1 | 28 April 2022 | None | |
| WO | 2023184926 | A1 | 05 October 2023 | None | |

Form PCT/ISA/210 (patent family annex) (July 2022)